Europäisches Patentamt

European Patent Office

Office européen des brevets

(19)

(11) **EP 0 741 172 A1**

(12) # EUROPEAN PATENT APPLICATION

(43) Date of publication:
06.11.1996 Bulletin 1996/45

(51) Int Cl.$^6$: **C09C 1/00**

(21) Application number: 96302645.5

(22) Date of filing: 16.04.1996

(84) Designated Contracting States:
DE ES FR GB IT NL PT

(30) Priority: 28.04.1995 GB 9508663

(71) Applicant: COOKSON MATTHEY CERAMICS PLC
London WC2V 6EQ (GB)

(72) Inventors:
• Eadon, Desmond Gerard
Emmer Green, Reading RG4 8SF (GB)

• Wood, Pamela
Milltimber, Aberdeen AB1 0DJ, Scotland (GB)

(74) Representative: Brewer, Leonard Stuart
Patents Department
Johnson Matthey Technology Centre
Blounts Court
Sonning Common
Reading Berkshire RG4 9NH (GB)

(54) **Pigmentary doped zirconia**

(57) A pigmentary material, useful particularly for forming enamel compositions, comprises a lattice of crystalline zirconia containing doped therein silver and alkali metal selected from the group consisting of lithium, potassium, rubidium and caesium.

**Description**

This invention relates to pigmentary material, a process for preparing it, a pigment comprising the material, a substance coloured by containing the pigment dispersed therein, an enamel composition containing the pigment and an article bearing the fired enamel composition on its surface.

A new pigmentary material has been invented. In a particular embodiment, the material can be used to produce on porcelain, china, earthenware, glass and other surfaces the decorative pink and purple colour space at present afforded by gold-based pigments; the present material is not based on the rare and expensive metal gold.

Accordingly, the invention provides a pigmentary material comprising a lattice of crystalline zirconia containing doped therein silver and alkali metal selected from the group consisting of lithium, potassium, rubidium and caesium.

The invention provides also a process for preparing this material, which process comprises calcining a zirconium component which yields the zirconia, a silver component which yields the silver, and an alkali metal component which yields the alkali metal, forming a calcination mixture of the resultant zirconium, silver and alkali metal moieties and cooling the mixture.

The invention provides also a process for preparing the pigmentary material, which process comprises calcining a mixture of a zirconium component which yields the zirconia, a silver component which yields the silver, and an alkali metal component which yields the alkali metal and cooling the mixture.

The invention also provides a pigment comprising the pigmentary material.

The invention provides also a substance coloured by containing the pigment dispersed therein.

The invention also provides an enamel composition comprising a frit and the pigment.

The invention provides also an article bearing on its surface the enamel composition which has been fired thereon.

US patent specification 3046151, published in 1962, discloses a method of preparing pink ceramic pigments comprising calcining an intimate mixture of from about 0.2% by weight to about 10% by weight, reported on the basis of silver present, of silver components capable of yielding metallic silver selected from the group consisting of silver powder, silver nitrate, silver carbonate, silver cyanide, and silver resinate; from about 20% by weight to 90% by weight of zirconium compounds capable of yielding zirconium oxide selected from the group consisting of zirconium hydrate, zirconium carbonate, zirconium oxide, zirconium fluoride, and zirconium oxyfluoride; there being present in the mixture a total of from about 7.0% by weight to about 50% by weight of fluoride compounds capable of yielding fluoride ions selected from the group consisting of ammonium bifluoride, zirconium fluoride and zirconium oxyfluoride, at a temperature of from about 600°C- 1100°C. Fluoride must be used in this method. Contrary to this long standing disclosure, the present pigmentary material can be produced without having to use fluoride. The present material is preferably made in the absence of the reference's fluoride compounds specified above. This is advantageous on health, safety and environmental grounds. When the fluoride-containing mixture of the reference is heated, fluoride is evolved, particularly the hazardous hydrogen fluoride. In addition, it has been found that severe attack occurs on refractory containers used in the process, contaminating the pigmentary material and limiting the life of the containers. Furthermore, it has been found that inhomogeneously coloured material tends to be produced, with a large quantity of white material in the interior of the fired sample and only a thin, surface, layer which is not white. The present material is a better pigmentary material, and can be prepared more easily.

The US specification states that it appears that its silver colouring agent is fixed within its zirconium oxide colour fixing agent by the ability of the fluoride ion, under calcination conditions, to open the zirconium oxide crystal lattice. This contrasts with the preference in the present invention to avoid anything more than a small amount of fluoride. The US specification refers to silver being within its lattice. It has been found, however, that much of it is not within the lattice since it is removed by acid washing. The present process enables higher amounts of silver to be obtained in the lattice, higher for instance than in the specific Examples of the US specification.

The present pigmentary material is extremely good as a pigment. The material can be of a range of colours, wider than the pink of the US specification mentioned above. The colour can be clean and strong. In contrast, the material of this reference is of weak colour; as far as we know, the material has never been commercialised. In addition, the present material can be made using calcination techniques conventional in the preparation of pigments. Furthermore, the present material is very temperature stable, *eg* at 600-1300°C, especially at 600-1000°C, making it very useful in enamels; this contrasts with known colloidal gold pigmentary materials.

The silver and alkali metal in the present material are in the lattice of crystalline zirconia. Any such silver or alkali metal moiety may be at a lattice or interstitial site or at a cavity in the zirconia. Silver and alkali metal are distributed at the atomic level. The material is essentially a single phase as measured by X-ray diffraction analysis (though the material may be admixed with other phases). The material is essentially a solid solution. The material is not a mere admixture of silver, alkali metal and zirconium oxide. The material is such as is produced by calcining a mixture of a zirconia-yielding component, a silver-yielding component and an alkali metal-yielding component and cooling the hot mixture. The silver and alkali metal are bound with the zirconia in the present material. The silver is not washed out on washing with 50% by volume nitric acid *(ie* 1:1 by volume concentrated nitric acid (AnalaR, 69% by weight):deionised water) at 50°C, and hence the material is not a mere admixture. Such washing is called herein acid washing.

The US specification claims a pigment in which metallic silver is fixed in a zirconium oxide crystal lattice, and states that the colouration of its material appears to be the result of the fixation of colloidal silver within the zirconium oxide crystal lattice. In contrast, the present material has been found to contain ionic silver as identified by both temperature programmed reduction (TPR) and electron spin resonance (ESR) spectroscopy. TPR of the material confirmed the presence of reducible silver species, on heating 0.4g of material from -100 to 900°C in a dynamic atmosphere (30ml/minute) of 10 volume% hydrogen/nitrogen. In addition, ESR spectroscopy recorded at room temperature (20°C) identified a proportion of silver present in the zirconia lattice in its +2 oxidation state - an unusual oxidation state of silver. The darker, stronger colours prepared by the present process were found to contain the higher content of $Ag^{2+}$. Preferably, the present material contains a colour-inducing amount of $Ag^{2+}$ in the lattice and contains more such $Ag^{2+}$ than any of the specific Examples of the US specification.

The present material has a lattice of crystalline zirconia (zirconium oxide), which can be shown by X-ray diffraction analysis. The lattice contains alkali metal and silver. The material contains a colour-affecting amount of the silver. A small amount of the silver has a remarkable effect on the colour. The material usually contains at least 0.05%, for instance at least 0.2%, preferably at least 0.4%, of the silver. Percentages in this specification are by weight unless otherwise indicated. The material especially contains at least 0.6, particularly at least 1, % of the silver. The material preferably contains up to 10, especially up to 6, particularly up to 5, for instance up to 4, % of the silver. Thus, in a preferred embodiment, the material contains 0.2-10%, particularly 0.4-10%, preferably 1-6%, especially 1-4%, of the silver. Additional silver can be present with the material, the additional silver not being in the lattice of crystalline zirconia and hence not being part of the essential structure. In fact, freshly made product usually does contain such additional silver left over from the process of preparation.

The present material contains a colour-affecting amount of the alkali metal selected from the group consisting of lithium, potassium, rubidium, and caesium. Potassium, rubidium and caesium are preferred, especially potassium. The alkali metal can be one or more of the lithium, potassium, rubidium and caesium; conveniently, only one is employed.

A small amount of the alkali metal has a remarkable effect on the colour. When the alkali metal is lithium, it is usually present as 0.02-2.0, particularly 0.05-1.1, preferably 0.1-0.4%, mol% of the material. When the alkali metal is potassium, rubidium, or caesium, it is usually present as 0.02-2.0, particularly 0.05-0.7, preferably 0.1-0.5, mol% of the material. Overall, the material usually contains at least 0.02, particularly at least 0.05, preferably at least 0.1, mol% of the alkali metal. The material usually contains up to 2.0, particularly up to 1.1, preferably up to 0.5, mol% of the alkali metal. The material usually contains 0.05-1.1mol% of the alkali metal.

The process of preparation described in the US specification mentioned above demands the use of fluoride, and traces of fluoride consequently tend to be found in the product, both in its bulk (as measured by chemical analysis) and in its surface (as measured by X-ray photoelectron spectroscopy). In contrast, the present process preferably avoids anything more than a small amount of deliberately added fluoride, and the present material preferably contains less than that amount of fluoride which is the minimum present in any of the specific Examples of the reference.

The present pigmentary material preferably contains less than 0.5%, especially less than 0.3%, particularly less than 0.2%, for instance less than 0.1%, eg less than 0.01%, by weight fluoride.

In a particular embodiment, the present material contains in its surface less than 0.1 atomic% of fluoride as measured by X-ray photoelectron spectroscopy (XPS). X-ray photoelectron spectroscopy data can be recorded on a Kratos XSAM 800 spectrometer, analysing samples using aluminium $K_\alpha$ radiation at 150W, with an 80eV pass energy and 7.5mm slits, a vacuum greater than $10^{-8}$Torr being employed, the measured binding energies being corrected relative to the C1s reference point at 284.8eV, and the data quantification being carried out using a Shirley background. It has been found that even stronger, cleaner, colours tend to be exhibited after acid washing. In this particular embodiment, the present material contains in its surface less than 0.1 atomic% of fluoride as measured by XPS after washing with 1:1 by volume concentrated nitric acid (AnalaR, 69% by weight):deionised water at 40-50°C. The washing must be done of course under such conditions, eg of stirring, that a product of steady composition is obtained. We have found that the temperature range of 40-50°C is suitable.

In the present material, the crystalline zirconia is advantageously in the monoclinic form; preferably at least half, particularly at least 75%, especially at least 90%, of the crystalline zirconia in any particular sample of material is in this form. It will be appreciated that the lattice of crystalline zirconia can be oxygen deficient.

The present material containing silver and alkali metal in a lattice of crystalline zirconia is a remarkable new pigmentary material. Providing this structure is present, the lattice can contain additional substance. It will be appreciated that the additional substance may induce a phase transition from one crystalline form of zirconia to another. For convenience, the lattice is described herein as containing additional substance, ie as though on taking away the zirconia lattice, silver (Ag and any counter-ion thereof) and alkali metal (and any counter-ion thereof), what remains is additional substance. It will be appreciated, however, that the additional substance is not present as a separate entity; the pigmentary material has a single phase, though it may be in admixture with another phase. The substance may have no significant effect on the colour, but it has been found that surprisingly small amounts can affect significantly the colour of the material or the colour of fired enamel resulting from the material. The substance usually makes up at least 0.01%, for instance at least 0.1%, for example at least 0.5%, *eg* at least 1.0%, by weight of the material. The substance usually makes up at most 50%, especially at most 30%, for instance at most 10%, by weight of the material, particularly when it affects the colour. The substance can comprise for instance at least one material selected from the lanthanides and second and third row transition metals of the Periodic Table. The substance can comprise specifically for instance at least one material selected from Al, Si, Y, Hf, Ce, In, Sr, Ca, Ba, Mg, Sn, Pr, Fe, Co, Ti, V, Mn, Cu, Ni, Zn, Na, Sb, Bi, B, Cd, Pb, Ga, Ge, Au, Cr, W, S and P and compounds (for instance an oxide) of any of these. Of particular interest is the substance comprising at least one material selected from Na, Mg, Ce, Sn, Sr, Al, Cr, V, Y and Hf (particularly Na, Mg, Ce and Sn) and compounds (for instance an oxide) of any of these.

The present pigmentary material can be prepared by calcining a zirconium component which yields the zirconia, a silver component which yields the silver, and an alkali metal component which yields the alkali metal, forming a calcination mixture (*ie* a mixture at calcination temperature) of the resultant zirconium, silver and alkali metal moieties and cooling the calcination mixture. One or two of the components can be calcined and while hot have the remainder admixed therewith. Preferably, however, a mixture of the zirconium component, the silver component and the alkali metal component is calcined to form the calcination mixture. The present calcination mixture is usually at a temperature of 500-1600°C, for instance 500-1300°C, preferably 650-1300°C, particularly 650-1100°C, and especially 810-910°C. In a particular embodiment, however, the temperature is 800-900°C. The calcination temperature may be held for ½-20 hours, usually ½-3 hours, for instance ½-1½ hours. For larger scale production, however, the calcination temperature may be held for instance for 3-7, particularly 4-6, hours. It has been found that holding the calcination temperature for longer periods tends to decrease the amount of silver in the zirconia lattice, and hence this is undesired. Similarly, it has been found that the higher calcination temperatures tend to lead to a lower silver content. It is desirable that as much of the silver in the silver component ends up in the lattice as possible, other things being equal, so as to avoid waste of silver component. The present process makes better use of the valuable silver starting material in this way than does the process of the US specification mentioned above. In the present process, preferably at least 10%, especially at least 15%, of the percent Ag in the combined weight of the zirconium component, calculated as zirconia, and the silver component, calculated as silver, is retained as the Ag in the pigmentary material.

The rate of temperature rise in the calcination does not seem to have a large effect on the colour resulting from the use of the pigmentary material in an enamel fired on top of glazed ceramic on the laboratory scale, though it may on large scale production. The rate of temperature rise can be for instance 100-900°C per hour, preferably 100-500°C per hour. For larger scale production, the rate may be for instance 200-400°C per hour. Stepping the increase in temperature by holding an intermediate temperature steady for a time before again increasing the temperature seems to tend to result in a weaker colour in the pigmentary material.

The atmosphere in which the calcination is done can be static or flowing. The atmosphere is conveniently air. A non-air atmosphere, however, can be employed, for instance a nitrogen atmosphere, an oxygen atmosphere or a 10% hydrogen/90% nitrogen by volume atmosphere. Calcination can also be carried out in a gas fuelled furnace. These different calcination atmosphere conditions can affect the colour of the pigmentary material. There is a tendency for a reducing atmosphere to lead to the production of burgundy or brown materials.

The present calcination can be conducted in ways conventional in the production of pigments.

The particular combination of components and conditions of the present process are so chosen as to produce the present pigmentary material. The zirconium component is preferably such that it decomposes to zirconia on heating to the temperature of the calcination mixture (and hence is not zirconia itself). Preferably, the zirconium component is such that on cooling from the calcination temperature, crystalline monoclinic zirconia is formed, especially rapidly from the tetragonal form. Advantageously, the zirconium component is such that on heating it to 860°C, it contains, as measured by XRD (X-ray diffraction) at 860°C, less than 45% (and preferably less than 20%) crystalline monoclinic zirconia and that on then cooling it from the 860°C to 20°C, it contains, as measured by XRD at 20°C, at least 55% (and preferably at least 80%, especially at least 90%) crystalline monoclinic zirconia. The remaining crystalline zirconia, measured by XRD at 860°C and on cooling to 20°C, consists of crystalline tetragonal zirconia. Quantitative analysis of the crystalline monoclinic zirconia content was determined using the method of Hideo Toraya, Masahiro Yoshimura and Shigeyuki Somiya, provided in the Journal of the American Ceramic Society, volume 67, pages C-119 to C-121 (1984). Of particular interest is zirconium carbonate and/or zirconium hydroxide, both of which decompose to zirconia on heating. Zirconium hydroxide is preferred for pink to purple shades.

The chemistry of zirconium hydroxide is poorly understood in the scientific community. It appears that the species produced depends on the method of production and subsequent treatment. There is much debate in the scientific literature as to the nature of the species that exist in solution and on subsequent precipitation. The amorphous nature of the precipitated material makes definitive characterisation virtually impossible and the fact that the material changes with time, or on drying, adds to the difficulty. Accordingly, there are several names for the material used in the literature including:

hydrous zirconia (water is bound loosely in non-stoichiometric quantities);

zirconia hydrate - $ZrO_2.nH_2O$;

zirconium hydroxide - $Zr(OH)_4$, $Zr(OH)_4(H_2O)_n$ formulated as $Zr_4(OH)_8{}^b(OH)_8{}^t(H_2O)_x$ where b indicates a bridging hydroxyl group and t a terminal hydroxyl group; and

zirconyl hydroxide - $ZrO(OH)_2$, $ZrO(OH)_2(H_2O)_m$ formulated as $Zr_4O_4(OH)_8{}^t(H_2O)_y$.

The term zirconium hydroxide is used in the present specification, as this is what it is called by a supplier. The term is used to embrace all such species and names. Similar terminology difficulties exist for zirconium carbonate, since it hydrates very readily. Its preparation generally results in a hydrous form, and its composition is difficult to characterise and control unless it is prepared and stored under strict conditions. It is referred to in the literature as zirconium carbonate, zirconium basic carbonate, hydrous carbonated zirconia and zirconyl carbonate. The term zirconium carbonate is used in the present specification to embrace all such names. In the Examples in this specification, we have defined the compounds used by determining the zirconia content of the amorphous zirconium starting material after calcination at 900°C.

The zirconium hydroxide can be bought in or prepared. It can be prepared by hydrolysing a zirconium compound, such as zirconyl nitrate or sulphate, with aqueous base. Alternatively, the zirconium hydroxide can be prepared by hydrolysing a zirconium compound, such as zirconium butoxide or propoxide, with water. In a particularly interesting technique, the zirconium hydroxide can be prepared by hydrolysing a zirconium compound, such as zirconium butoxide or propoxide, with an aqueous solution of the silver component, such as silver nitrate. The zirconium hydroxide can be prepared by sol-gel or aerogel techniques.

Advantageously, the zirconium component is amorphous. It has been found that stronger colours then tend to result. The zirconium component employed is preferably substantially wholly amorphous, though mixtures of amorphous and crystalline component, preferably containing more than 50% by weight amorphous component, can be employed.

Thus, preferably crystalline zirconia is avoided as the zirconium component. This tends to result in poorer colours and to need the use of mineralisers.

Preferably, the zirconium component is of particle size 1-25, especially 1-15, for instance 1-4, for example 1.5-3, μm. In a particular embodiment, however, the particle size is 1-2μm. Particle sizes specified herein are as measured by Coulter Counter unless otherwise indicated, though similar results are obtained by scanning electron microscopy. It has been found that cleaner, slightly stronger, darker, redder, colours (as viewed by eye or machine) tend to result from the use of zirconium component of this particle size, at least when the silver component is silver nitrate, silver(I) oxide or silver carbonate. Accordingly, it is preferred that the zirconium component be milled down to this size before the calcination. It has been found also that milling the zirconium component before calcination increases the loading of the silver that is taken up into the zirconia lattice up to a maximum, whereafter on further milling the loading declines.

The ranges given in the preceding paragraph apply also when a mixture of the zirconium component with the silver component and/or the alkali metal component is milled.

Metallic silver can be employed as the silver component. More preferred is the silver component being such that it at least has begun to decompose to metallic silver on heating to a temperature below 600°C, especially below 550°C, in particular below 300°C, for instance below 250°C, as this tends to give a stronger colour. For instance, silver acetate decomposes at 220°C and tends to give after acid washing a strong purplish pink colour (unless modified by additional substance) while silver sulphate decomposes at ca 850°C and tends to give after acid washing a weak pink/buff colour (unless modified by additional substance).

It is particularly preferred that the silver component is metallic silver or is such that it at least has begun to decompose to metallic silver at a temperature not more than 200°C above the temperature which is (a) 370°C or (b) if higher, the temperature at which decomposition of the zirconium component to zirconia begins to occur. In another particularly preferred embodiment, the silver component is metallic silver or is such that it at least has begun to decompose to metallic silver at a temperature not more than 200°C above the temperature at which the zirconium component begins to form crystalline zirconia. Zirconium hydroxide and zirconium carbonate typically begin to form crystalline zirconia at about 370°C. The silver seems to get locked into the lattice better when it is present as zirconium and oxygen atoms are arranging themselves into their crystal structure.

The silver component can be, for instance, silver nitrate, silver(I) oxide, silver(II) oxide, silver acetate, silver lactate, silver laurate, silver stearate, silver fluoride, silver citrate, silver carbonate, silver benzoate, silver itself or silver nitrite. The silver component is preferably silver, silver nitrate, silver acetate, silver(I) oxide, silver(II) oxide or silver carbonate. Alternatively, the silver component can also be a source of additional substance by employing a silver component such as silver vanadate, tungstate, chromate, phosphate, sulphide or sulphate.

The silver component is preferably of particle size 1-15μm. In a more preferred embodiment, however, the silver component is of particle size 0.1-15, particularly 0.1-5, especially 0.5-2, μm. Milling tends to result in a cleaner, stronger, colour. As the milling time increases, the amount of silver in the lattice of the pigmentary material tends to increase.

When the silver component is water-soluble (silver nitrate for instance), it can be introduced as a solution in water.

The alkali metal component can be for instance alkali metal carbonate, hydrogen carbonate, nitrate, fluoride, oxide or hydroxide or salt with a carboxylic acid such as tartrate, oxalate, citrate, hydrogen phthalate or acetate. Alternatively, the alkali metal component can also be a source of additional substance by employing an alkali metal component such as alkali metal borate, phosphate, sulphate or stannate or a mixed tartrate of sodium with one of the present alkali metals. In a particular embodiment, the alkali metal component is alkali metal chloride. The alkali metal component is preferably alkali metal carbonate, hydrogen carbonate, acetate, citrate, nitrate, oxalate, hydrogen phthalate, fluoride or stannate or a mixed alkali metal tartrate such as sodium potassium tartrate.

The alkali metal component can be introduced as a solution in water.

Two or more of the present essential components, for instance the silver component and the zirconium component, can be milled together. When one or more of the present essential components is milled, this can be done in known way, for instance using a mortar and pestle, ball mill or vibro mill.

When an additional substance as discussed above is to be present in the present material, it can be introduced by means of a component yielding the substance in the calcination mixture.

Mineraliser can be employed in the present process. Indeed, the alkali metal component itself may act as a mineraliser. Fluorides other than alkali metal fluorides are, however, desirably avoided.

The present process is preferably conducted by calcining a mixture comprising the zirconium component, the silver component and the alkali metal component. The mixture preferably comprises a homogeneous mixture of particles of the zirconium component, particles of the silver component and particles of the alkali metal component. The mixture usually contains 1-50, preferably 2-10, especially 6-9, parts by weight of the silver component measured as silver per 100 parts by weight of the zirconium component measured as zirconia. The mixture usually contains 0.2-25, particularly 0.2-16, preferably 0.4-11, mol% of the alkali metal component calculated as alkali metal in the way defined hereafter immediately before the Examples. The same proportions of the various components can be employed when the present process is conducted in other ways. The mixture is usually a batch mixture, and this is usually calcined batch-wise. Continuous production techniques can, however, also be employed.

Preferred in the present process is the weight of fluoride compound in the total weight of the components to be calcined being less than 6%, especially less than 4%, particularly less than 2%. In a preferred embodiment, there is no deliberately added fluoride. This contrasts with the 7-50% required in the process of the US specification mentioned above.

The mixture containing less than 6%, especially less than 4%, particularly less than 2%, by weight of fluoride compound is the preferred mixture for use in the present process. In a preferred embodiment, the mixture contains no deliberately added fluoride other than alkali metal fluoride.

The zirconium, silver and alkali metal moieties should be brought into intimate admixture with one another so as to form the silver and alkali metal in the lattice of crystalline zirconia. The mixture is accordingly preferably an intimate mixture. The calcination mixture should be homogeneous in order to produce homogeneous desired product. The mixture which is calcined is accordingly preferably homogeneous. The mixture can be calcined in known way, for example in a tunnel kiln, intermittent kiln or rotary tube furnace. Preferably the mixture which is calcined is in a layer at least 5mm deep, *eg* 1-100cm, though usually 10-30cm, deep; good colour throughout the product is obtained in contrast to what has been found with the process described in US specification 3046151, as is mentioned above.

When preparing the pigmentary material in the present way, it has been found that not all the silver and alkali metal emanating from the silver component and the alkali metal component finishes up in the zirconia lattice. Some of the silver and alkali metal is left free. The free silver and alkali metal can remain, but if it is not desired for the use to which the pigmentary material is to be put, the free silver can readily be removed, for instance by 50% by volume nitric acid at 50°C. Free alkali metal can readily be removed by aqueous washing, *eg* the acid washing which removes the free silver.

The amount of silver in the lattice tends to increase, at least up to a certain level, as the proportion of silver component measured as silver to zirconium component measured as zirconia increases in the starting components.

The particular zirconium, silver and alkali metal components can affect the colour of the pigmentary material when fired in an enamel composition on glazed ceramics. Thus, among silver components, silver nitrate tends to give a particularly strong colour, but with a high blue component, while silver(I) oxide gives a redder colour, and silver carbonate also gives a redder colour but is less blue.

The present pigmentary material is outstandingly good as a pigment. The material is coloured in the sense that when it is seen by a normal unaided human eye receiving light reflected from it, the material is perceived as exhibiting a dominant colour which is describable in terms of at least one of four so-called "basic colours". These colours (namely red, yellow, green and blue) are used to describe colour as a physiological sensation rather than a physical property analysable by spectroscopy. The use of the four basic colours together with two other parameters (which are "lightness" and "chroma") to describe colour as perceived by the eye is explained in Chapter 1 of the book "Colouring of Plastics" edited by T G Webber and published by Wiley-Interscience of New York in 1979. In particular, the book outlines the CIELab colour coordinates system for describing colour and also explains how a colour can be intermediate in the sense that it is describable in terms of two or more basic colours. For example, orange as perceived by the eye is describable as a combination of red and yellow even though to a spectroscopist a pure orange light might contain only one wavelength of light. The book explains how colours can be expressed as an angle of 0° to 360° and that this angle is called the "hue" of the colour. Using the CIELab system, reds for example have hue angles of about 30°, yellows of about 90°, greens of about 145° and blues of about 270°. Intermediate angles represent shades describable in terms of more than one basic colour (for example 60° represents an orange which is describable in terms of red and yellow).

The present material has a wide range of colours, depending for instance on any additional substance as discussed above incorporated into it. The present material is also of good chroma. In terms of the CIELab colour coordinates system, its chroma is usually 5-32, for instance 20-29, for example 22-28. The material is highly opaque.

The present material is useful in a wide range of pigmentary applications. It can be formulated and used as a pigmentary material in conventional ways.

When used as the whole or a part of a pigment, the material usually has a particle size distribution of 0.5-30 microns. The particle size can be reduced by grinding.

The pigment comprises (ie consists of or includes) the present material. The material can be employed as sole pigmentary material or admixed with other pigmentary material, eg to change the colour or shade. The present material produces good pigments when admixed with an unusually wide range of other pigmentary materials. When used in admixture with other pigmentary material, the proportions of the two can range from 0.1-99.9 parts by weight of other pigmentary material per 0.1-99.9 parts by weight of present material.

The other pigmentary material can be known per se. It can be inorganic or organic, for instance one or more of the following:

black $CuCr_2O_4$ (DCMA 13-38-9), $(Fe,Co)Fe_2O_4$ (DCMA 13-39-9), $(Co,Fe)(Fe,Cr)_2O_4$ (DCMA 13-40-9) and $(Fe,Mn)$ $(Fe,Mn)_2O_4$ (DCMA 13-41-9); yellow/orange $(Zr,V)O_2$ (DCMA 1-01-4), $(Ni,Sb,Ti)O_2$ (DCMA 11-15-4), $BiVO_4$ (BASF L1110), $Pb_2Sb_2O_7$ (DCMA 10-14-4), $(Sn,V)O_2$ (DCMA 11-22-4), $(Zr,Pr)SiO_4$ (DCMA 14-43-4) and $(Ti,Cr,Sb)O_2$ (DCMA 11-17-6); green $CoCr_2O_4$ (DCMA 13-30-3), $3CaO:Cr_2O_3:3SiO_2$ (DCMA 4-07-3), $Co_2TiO_4$ (DCMA 13-31-3) and $Cr_2O_3$ (DCMA 3-05-3); blue $(Zr,V)SiO_4$ (DCMA 14-42-2), $Co_2SiO_4$ (DCMA 5-08-2), $(Co,Zn)Al_2O_4$ (DCMA 13-28-2) and $CoAl_2O_4$ (DCMA 13-26-2); pink $(Al,Mn)_2O_3$ (DCMA 3-04-5), $(Al,Cr)_2O_3$ (DCMA 3-03-5), $(Zr,Fe)SiO_4$ (DCMA 14-44-5) and $(Sn,Cr)O_2$ (DCMA 11-23-5); orange/yellow CdS and related derivatives $CdS_{1-x}Se_x$ and $Cd_{1-x}Zn_xS$; brown $Fe(Fe,Cr)_2O_4$ (DCMA 13-33-7), $(Fe,Mn)(Fe,Cr,Mn)O_4$ (DCMA 13-48-7); $(Ti,Mn,Cr,Sb)O_2$ (DCMA 11-46-7), $Fe_2O_3$ (DCMA 3-06-7), $(Zn,Fe)(Fe,Cr)_2O_4$ (DCMA 13-37-7) and $NiFe_2O_4$ (DCMA 13-35-7); grey $(Sn,Sb)O_2$ (DCMA 11-24-8) and $(Ti,V,Sb)O_2$ (DCMA 11-21-8); white $TiO_2$; and colloidal gold and/or colloidal silver containing colours. The other pigmentary material can be for instance a colloidal gold containing colour together with a blue, green or yellow colour. The DCMA number is that given in DCMA, Third Edition, 1991, published by the Dry Color Manufacturers' Association, USA.

The pigment can be used to colour a wide range of substances. The substance can contain for instance 0.01-90% by weight of the pigment. The substance can be for instance an enamel. The pigment can be used as a dispersion in an organic or aqueous system to make for instance a paint or ink. The pigment can be used as a colorant in colour printers.

Of particular interest is an enamel composition comprising a frit and the pigment, usually in the proportions of 1-99 parts by weight of the frit and 1-99 parts by weight of the pigment, preferably 60-95 parts by weight of the frit and 5-40 parts by weight of the pigment. The frit can be conventional; it can be leaded or unleaded. The enamel composition can be made and used in conventional ways. It can be made by admixing the ingredients, preferably by milling. It is usually applied as a dispersion in a carrier material; the enamel composition then usually contains 50-80%, for instance 60-80%, in total of the frit and pigment. The carrier material can be an aqueous or organic medium; it can be thermoplastic; it can be infra-red drying or ultra-violet curing; all such types of media are known and can be employed in known ways.

The enamel composition can be applied to an article in the usual way. For instance, the composition can be applied by printing (for example screen printing) or spraying. It can be applied as a paste. It can be applied directly to the article to bear the enamel. Alternatively, it can be used to form a transfer which in turn is applied to the article to bear the enamel. Accordingly, the invention includes a transfer comprising the enamel composition on a transfer backing sheet; usually the transfer includes a cover coat.

The enamel composition is usually applied to decorate the article. After application, the composition can be fired in the usual way, generally at 500-1300°C. Usually, for a standard firing cycle after application to ceramic ware bearing a fired glaze, the firing temperature is within the range 700-850° C and the firing time is 5-7 hours, with the peak temperature being held for ½-1½ hours. Usually, for a fast firing cycle after application to ceramic ware bearing a fired glaze, the firing temperature is within the range 700-1000°C and the firing time is ½-4 hours, with the peak temperature being held for 5-20 minutes. The enamel composition can alternatively be used under or in glaze on ceramic ware.

The enamel composition is preferably applied to glass or ceramic ware, though it can be applied to metal ware. The ceramic ware can be china, earthenware or porcelain. The ceramic ware bearing the fired composition may bear also a fired glaze. The composition may be applied to ceramic ware bearing a fired glaze. The present ceramic ware can be for instance a tile, sanitary ware or table-ware such as a plate. The glass can be for instance container glass or toughened glass. The metal ware is especially a jewellery substrate.

Typical decorating processes by which the present pigment may be applied include the following: hand-painting or hand-banding; direct screen; offset litho transfer; curtain or waterfall printing; spray applications; screen transfer-waterslide; screen transfer - heat release; total transfer; silicone pad printing; machine lining; dusting/crinkle/jewellery; heat release decal; banding brush - machine or hand; banding steel wheel or neoprene wheel machines; ink-jet printing or other non-impact printing; wet litho printing, or stamping.

The invention is illustrated by the following Examples.

The CIELab coordinates were measured using a Spectraflash 500 obtained from datacolour international, England, with a Chroma-QC 3000 software package. The instrument was set in reflectance mode with D65 illuminant and a 10° standard observer angle, and employed with a small circular aperture of radius 12mm. The specular component was included, as was the UV component, and measurements were made every 20nm. The CIELab equations were used to calculate the values of lightness (L), red/green component (a), yellow/blue component (b), chroma (C) and hue angle (H). Before making any measurements, the instrument was calibrated using a standard black trap and a white ceramic standard calibration tile. A brass holder was used to contain the powder for colour measurement. This holder consisted of a disc of brass 40mm in diameter and 10mm thick, with a circular well of diameter 15mm and depth 1mm milled into the centre of one of the flat faces. The pigment powder was packed into the well, taking care to completely fill the well. For these measurements, the powder must be firmly packed into the well and the top surface must be level with the surface of the brass disc. The brass surface should be cleaned of any residual powder. The Spectraflash was mounted vertically and the powder sample measured in the horizontal position, ensuring that the packed powder surface was aligned with the aperture. After making the measurement, the brass sample holder and powder were removed from the instrument and values of the lightness, red/green component, yellow/blue component, chroma and hue angle were tabulated.

The CIELab coordinates of on-glaze enamels were measured by applying a transfer to a flat Limoges porcelain tile and, after firing at 810°C, using the Spectraflash instrument with the parameters as described above.

The on-glaze enamels were prepared in unleaded on-glaze frit (Cookson Matthey Ceramics plc) unless stated otherwise.

Transfers for on-glaze applications were printed through a 120T screen unless stated otherwise. The transfers of Examples 1-19 were printed using a screen printer from Dek PrintingMachines Ltd, and those of all other Examples were printed using a screen printer obtained from Retek Engineering Ltd. The Dek printer printed a thicker layer through the 120T screen than that obtained using the Retek printer. For this reason comparative examples were printed using the same screen printer. Specific Examples were also hand printed as stated in the text.

All references to zirconium hydroxide are to that available under the name zirconium hydroxide grade XZO 587/03 from Magnesium Elektron, UK (a subsidiary of Alcan) unless otherwise stated.

Room temperature was 20°C.

References to starting with particular mol percentages are calculated as follows: The zirconium component is calculated as equivalent $ZrO_2$ by calcining a sample of the component in air at 900°C for 2 hours, and hence allowing for loss on ignition. The other components are calculated as their cationic elements. For instance, when a mixture of zirconium, silver and potassium components is calcined, the mol% potassium is given by

$$\text{mol\% K} = \frac{[K]}{[K] + [Ag] + [ZrO_2]} \times 100$$

References to chemical analysis are to wet chemical analysis. Wet chemical analysis was performed as follows: The pigmentary material was fused in $Na_2O_2$, in a zirconium crucible, for Ag, Li, Rb and Cs analysis. The fused material was diluted, and then analysed by inductively coupled plasma atomic emission spectrometry (ICPAES) for Ag analysis, using a Thermo Jarrell Ash Poly Scan 61E spectrometer, whereas inductively coupled plasma mass spectrometry (ICPMS) was used for Li, Rb and Cs analysis, using a Fisons Plasma Quad PQ2+ spectrometer. K and where stated Na analysis of the pigmentary material was carried out by dissolving the material in 1%HF/5%$HNO_3$ solution. The resultant solution was diluted, and the K content and where stated Na content analysed by atomic absorption spectrometry (AAS), using a Varian AA300 spectrometer. In each case, chemical analysis *via* ICPAES, ICPMS and AAS was carried out using matrix matched standards and blanks.

### EXAMPLES 1 - 19: Ag and K doped ZrO$_2$

### EXAMPLE 1

The preparative route for a Ag and K doped ZrO$_2$ pigmentary material starting with 7.314 mol% Ag and 1.223 mol% K is provided.

1. 56.164g of zirconium hydroxide (71.220% ZrO$_2$) was ball milled for 5 hours with 3.008g of Ag$_2$O, 0.300g of K$_2$CO$_3$ and 50ml of acetone in a 1 pint (0.57 litre) ball mill.

2. The acetone was evaporated off and the powder dry mixed in a mortar and pestle for 10-15 minutes.

3. The powder was fired at 860°C for 1 hour in an electrically heated furnace, with a ramp rate of 6.67°C/minute from room temperature, and furnace cooled. A greyish purple/pink sample was produced, with colour coordinates; L = 29.46, a = 14.47, b = -3.01, C = 14.78 and H = 348.24.

4. The sample was then acid washed in a 1:1 by volume nitric acid:deionised water solution in order to remove any uncombined, or "free" Ag. A flocculant Magnafloc 155, (an anionic polyacrylamide from Allied Colloids Limited) was added, as detailed below, at various stages of the acid washing process in order to prevent particle comminution and to aid the filtering process.

The powder was suspended in 300ml of 1:1 by volume HNO$_3$:H$_2$O (the HNO$_3$ being AnalaR 69% by weight nitric acid, *ie* concentrated nitric acid, from BDH, and the water being deionised water) for 1 hour with continual stirring and mild heating (40-50°C). The heating was then switched off and the suspension cooled for *ca* 10 minutes with continual stirring. 10ml of 0.5% (weight/volume) Magnafloc 155 aqueous solution (prepared in deionised water) was slowly added dropwise from a pipette, in order to agglomerate the sample. The suspension was stirred for a further minute before switching off the stirrer and allowing the powder to settle out. The acidic solution was decanted off for Ag reclamation. The sample was then re-suspended in 600ml deionised water. 10ml of 0.5% Magnafloc 155 solution was added dropwise and the suspension stirred for 1 minute before settling the powder and decanting off the liquid. The aforementioned water wash was repeated, with a further 10ml of Magnafloc 155 added. The powder was then re-suspended in 600ml deionised water and filtered through a triple layer of filter paper (Whatman 541 inside two 542). The sample was washed with deionised water until the conductivity of the filtrate was less than 2000$\mu$S.

5. The acid washed powder was then dried at 100°C. A purplish pink powder was obtained, with colour coordinates; L = 36.06, a = 23.48, b = -9.91, C = 25.48 and H = 337.12. Chemical analysis of the material identified 1.57% Ag and 0.12% K, which corresponds to 1.785mol% Ag and 0.376mol% K, contained in the ZrO$_2$ lattice. This powder produced a strong reddish peach colour in on-glaze application on porcelain, with colour coordinates; L = 44.29, a = 33.30, b = 7.28, C = 34.09 and H = 12.33.

Electron probe microanalysis of the acid washed material was carried out. The Ag and K were found to be evenly distributed throughout the ZrO$_2$ distribution map, with no agglomerations of Ag or K noted.

### EXAMPLE 2: Increased Ag Loading

The preparative route for a Ag and K doped ZrO$_2$ pigmentary material starting with 9.211mol% Ag and 1.198mol% K is provided. The ratio of K:ZrO$_2$ was kept the same as in Example 1, with the Ag:ZrO$_2$ ratio increased.

1. 56.164g of zirconium hydroxide (71.220% ZrO$_2$) was ball milled with 3.867g of Ag$_2$O, 0.300g of K$_2$CO$_3$ and 50ml of acetone in a 1 pint (0.57 litre) ball mill for 5 hours.

2. The acetone was evaporated off and the powder dry mixed in a mortar and pestle for 10-15 minutes.

3. The powder was then fired and acid washed as described in Example 1. A purplish pink powder was obtained, with colour coordinates; L = 33.55, a = 24.07, b = -8.98, C = 25.69 and H = 339.53 (slightly darker, stronger and redder than the acid washed powder produced in Example 1). Chemical analysis of the material identified 1.56% Ag and 0.10% K, which corresponds to 1.774mol% Ag and 0.314mol% K, contained in the ZrO$_2$ lattice. This powder produced a strong reddish peach colour in on-glaze application on porcelain, with colour coordinates; L = 45.49, a = 34.45, b = 5.21, C = 34.85 and H = 8.60 (stronger and redder than that produced in Example 1).

### EXAMPLES 3 - 8: Varying the K Loading, as $K_2CO_3$

Ag and K doped $ZrO_2$ pigmentary materials were prepared starting with a range of K loadings, varying from 0.493-7.237mol%, as indicated in Table 1A. The $Ag:ZrO_2$ ratio was kept constant throughout. The samples were prepared following the experimental procedure described in Example 1, with the $K_2CO_3$ content altered accordingly. The powder colour coordinates of the acid washed material are provided in Table 1A, with corresponding porcelain on-glaze colour coordinates given in Table 1B and earthenware on-glaze colour coordinates given in Table 1C. The weight% Ag and K determined *via* wet chemical analysis of the acid washed product are also provided in Table 1A, together with corresponding mol percentages. Data obtained in Example 1 are included for comparison.

EP 0 741 172 A1

## Table 1A

Initial mol% K and Ag, powder colour coordinates and weight and mol% Ag and K after acid washing

| Example number | Mol% K | Mol% Ag | L | a | b | C | H | %Ag after acid wash | %K after acid wash | Mol% Ag after acid wash | Mol% K after acid wash |
|---|---|---|---|---|---|---|---|---|---|---|---|
| 3 | 0.493 | 7.368 | 29.63 | 17.12 | -10.56 | 20.11 | 328.33 | 1.91 | 0.05 | 2.174 | 0.157 |
| 4 | 0.819 | 7.344 | 30.15 | 19.89 | -9.11 | 21.07 | 335.40 | 1.65 | 0.08 | 1.877 | 0.251 |
| 1 | 1.223 | 7.314 | 36.06 | 23.48 | -9.91 | 25.48 | 337.12 | 1.57 | 0.12 | 1.785 | 0.376 |
| 5 | 1.424 | 7.299 | 36.71 | 23.40 | -9.43 | 25.22 | 338.06 | 1.33 | 0.12 | 1.513 | 0.377 |
| 6 | 2.378 | 7.228 | 42.84 | 22.13 | -2.92 | 22.32 | 352.49 | 0.94 | 0.16 | 1.069 | 0.502 |
| 7 | 4.682 | 7.058 | 49.17 | 19.14 | -7.03 | 20.39 | 339.82 | 0.43 | 0.15 | 0.489 | 0.471 |
| 8 | 7.237 | 6.869 | - | - | - | - | - | 0.18 | 0.15 | 0.205 | 0.471 |

A range of pinkish purple through purplish pink, peach/pink, to pale lavender/pink powder colours were obtained with increasing initial K dopant. The samples became progressively lighter with increasing initial mol% K, with the colour strength increasing to a maximum around 1.223mol% K, then decreasing. A gradual shift in hue angle towards the redder shades was noted up to 2.378mol% K.

Wet chemical analysis of the acid washed powder identified a decrease in the weight% Ag retained in the $ZrO_2$ lattice with increasing initial mol% K. A proportion of this Ag was found to be $Ag^{2+}$, as detected by electron spin resonance spectroscopy (ESR). The $Ag^{2+}$ content was also found to decrease with increasing initial mol% K. The % K retained after acid washing was found to increase to a maximum for samples prepared starting with 2.378mol% K and then remain substantially constant.

The Ag and K doped $ZrO_2$ pigmentary material produced in Example 3 was analysed by transmission electron microscopy. Amorphous regions of Ag and K were identified in rounded cavities of 6-30nm size in the $ZrO_2$ lattice. These cavities are formed during crystallisation of the $ZrO_2$ lattice from amorphous zirconium hydroxide. On exposure to the electron beam the Ag and K species were found to vibrate in these cavities, appearing like a solution in nature. The boundaries of these cavities were found to be rigid with no movement noted.

TABLE 1B

| Porcelain on-glaze colour coordinates | | | | | |
|---|---|---|---|---|---|
| Example number | L | a | b | C | H |
| 3 | 39.44 | 27.54 | -2.12 | 27.62 | 355.60 |
| 4 | 43.49 | 29.43 | 0.49 | 29.43 | 0.95 |
| 1 | 44.29 | 33.30 | 7.28 | 34.09 | 12.33 |
| 5 | 49.34 | 33.87 | 8.63 | 34.95 | 14.29 |
| 6 | 62.51 | 25.38 | 16.69 | 30.38 | 33.33 |
| 7 | 69.58 | 19.39 | 14.23 | 24.05 | 36.27 |
| 8 | 74.49 | 15.51 | 7.37 | 17.17 | 25.41 |

A wide range of reddish purple through reddish peach, pale orange/peach to pale peach/pink porcelain on-glaze colours were produced with increasing initial mol% K.

TABLE 1C

| Earthenware on-glaze colour coordinates | | | | | |
|---|---|---|---|---|---|
| Example number | L | a | b | C | H |
| 3 | 37.43 | 25.15 | -1.25 | 25.18 | 357.15 |
| 4 | 40.77 | 27.93 | 1.23 | 27.95 | 2.52 |
| 1 | 41.57 | 32.82 | 6.84 | 33.53 | 11.77 |
| 5 | 46.96 | 34.72 | 9.05 | 35.88 | 14.61 |
| 6 | 62.64 | 27.52 | 19.38 | 33.66 | 35.15 |
| 7 | 69.31 | 23.33 | 12.97 | 26.69 | 29.07 |
| 8 | 76.06 | 19.57 | 4.84 | 20.16 | 13.90 |

A similar colour range was produced on earthenware to that produced on porcelain.

**EXAMPLES 9 and 10: Varying the Ag source to Ag$_2$CO$_3$**

**EXAMPLE 9**

The preparative route for a Ag and K doped $ZrO_2$ pigmentary material starting with 7.314mol% Ag and 1.223mol% K is provided. In this case, $Ag_2CO_3$ was used as the Ag source.

1. 56.164g of zirconium hydroxide (71.220% $ZrO_2$) was ball milled for 5 hours with 3.579g of $Ag_2CO_3$, 0.300g of

$K_2CO_3$ and 50ml of acetone in a 1 pint (0.57 litre) ball mill.

2. The acetone was evaporated off and the powder dry mixed in a mortar and pestle for 10-15 minutes.

3. The sample was then fired and acid washed as outlined in Example 1. A purplish pink powder was obtained, with colour coordinates; L = 34.59, a = 24.27, b = -9.49, C = 26.06 and H = 338.65. Chemical analysis of the material identified 1.40% Ag and 0.11% K, which corresponds to 1.592mol% Ag and 0.345mol% K, retained in the $ZrO_2$ lattice. This powder produced a strong reddish peach colour in on-glaze application on porcelain, with colour coordinates; L = 45.66, a = 34.14, b = 4.90, C = 34.49 and H = 8.16.

## EXAMPLE 10

The preparative route for a Ag and K doped $ZrO_2$ pigmentary material starting with 11.915mol% Ag and 1.162mol% K is provided. The ratio of K:$ZrO_2$ was kept the same as in Example 9, with the Ag:$ZrO_2$ ratio increased.

Example 9 was repeated except for using 6.135g of $Ag_2CO_3$. A purplish pink powder was obtained, with colour coordinates; L = 33.05, a = 23.22, b = -9.31, C = 25.02 and H = 338.16 (slightly darker and weaker than the powder produced in Example 9). Chemical analysis of the material identified 1.42% Ag and 0.07% K, which corresponds to 1.616mol% Ag and 0.220mol% K, contained in the $ZrO_2$ lattice. This powder produced a reddish peach colour in on-glaze application on porcelain, with colour coordinates; L = 49.69, a = 34.81, b = 4.09, C = 35.05 and H = 6.71 (lighter and slightly stronger than that produced in Example 9).

## EXAMPLE 11: Varying the K source to KF

The preparative route for a Ag and K doped $ZrO_2$ pigmentary material starting with 7.227mol% Ag and 2.396mol% K is provided. In this case, KF was used as the K source.

1. 56.164g of zirconium hydroxide (71.220% $ZrO_2$) was ball milled with 3.008g of $Ag_2O$, 0.500g of KF and 50ml of acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1. A purplish peach powder was obtained, with colour coordinates; L = 44.32, a = 27.15, b = 1.29, C = 27.18 and H = 2.73. Chemical analysis of the material identified 1.21% Ag and 0.15% K, which corresponds to 1.375mol% Ag and 0.470mol% K, retained in the $ZrO_2$ lattice. This powder produced a strong orange/peach colour in on-glaze application on porcelain, with colour coordinates; L = 49.30, a = 32.74, b = 18.22, C = 37.47 and H = 29.09.

## EXAMPLES 12 - 18: Varying the K Loading as KF

Ag and K doped $ZrO_2$ pigmentary materials were prepared starting with a range of K loadings, varying from 0.610 to 7.241mol% as indicated in Table 2A, with KF used as the K source. The Ag:$ZrO_2$ ratio was held constant throughout. The samples were prepared following the experimental procedure described in Example 11, with the KF content altered accordingly. The powder colour coordinates of the acid washed material are given in Table 2A, with corresponding porcelain on-glaze colour coordinates provided in Table 2B and earthenware colour coordinates given in Table 2C. The data obtained in Example 11 are included for comparison. The weight% Ag and K determined *via* wet chemical analysis of the acid washed product are also provided in Table 2A, together with corresponding mol percentages. The K content of the sample prepared in Example 18 was undetermined.

## TABLE 2A

Initial mol% K and Ag, powder colour coordinates and weight and mol%Ag and K after acid washing

| Example number | Mol% K | Mol% Ag | L | a | b | C | H | %Ag after acid wash | %K after acid wash | Mol% Ag after acid wash | Mol% K after acid wash |
|---|---|---|---|---|---|---|---|---|---|---|---|
| 12 | 0.610 | 7.359 | 27.59 | 18.18 | -12.05 | 21.81 | 326.46 | 1.69 | 0.05 | 1.924 | 0.157 |
| 13 | 1.213 | 7.315 | 34.26 | 23.77 | -8.08 | 25.11 | 341.23 | 1.55 | 0.11 | 1.763 | 0.345 |
| 14 | 1.808 | 7.271 | 38.59 | 26.20 | -2.68 | 26.33 | 354.16 | 1.23 | 0.11 | 1.399 | 0.345 |
| 11 | 2.396 | 7.227 | 44.32 | 27.15 | 1.29 | 27.18 | 2.73 | 1.21 | 0.15 | 1.375 | 0.470 |
| 15 | 3.552 | 7.141 | 44.65 | 27.69 | 2.69 | 27.82 | 5.55 | 0.85 | 0.13 | 0.967 | 0.408 |
| 16 | 4.680 | 7.058 | 47.69 | 27.22 | -2.18 | 27.31 | 355.42 | 0.74 | 0.14 | 0.842 | 0.439 |
| 17 | 5.782 | 6.976 | 52.31 | 26.01 | -7.32 | 27.02 | 344.28 | 0.37 | 0.08 | 0.422 | 0.252 |
| 18 | 7.241 | 6.868 | 49.97 | 21.55 | -9.81 | 23.68 | 335.53 | 0.65 | | | |

A wide range of pinkish purple through purplish pink, purplish peach, peach/pink to pink powder colours were obtained with increasing initial K dopant. A shift in hue angle towards the redder shades was noted with increasing initial mol% K, up to 3.552mol% K, with an associated increase in colour strength. In addition, the samples became progressively lighter with increasing initial mol% K.

In general, wet chemical analysis of the acid washed powder identified a gradual decrease in weight% Ag contained in the $ZrO_2$ lattice with increasing initial mol% K. The % K retained after acid washing increased to a maximum for samples prepared starting with 2.396mol% K and then decreased.

TABLE 2B

| Porcelain on-glaze colour coordinates | | | | | |
|---|---|---|---|---|---|
| Example number | L | a | b | C | H |
| 12 | 42.28 | 28.29 | -2.33 | 28.38 | 355.30 |
| 13 | 42.30 | 30.56 | 4.65 | 30.91 | 8.66 |
| 14 | 48.48 | 31.80 | 10.88 | 33.61 | 18.88 |
| 11 | 49.30 | 32.74 | 18.22 | 37.47 | 29.09 |
| 15 | 53.13 | 32.93 | 18.02 | 37.54 | 28.69 |
| 16 | 54.46 | 34.33 | 16.69 | 38.17 | 25.92 |
| 17 | 57.83 | 34.58 | 9.23 | 35.79 | 14.94 |
| 18 | 63.64 | 29.63 | 6.98 | 30.44 | 13.25 |

A wide range of reddish purple through reddish peach, orange/peach, peach/pink to pink porcelain on-glaze colours were produced with increasing initial mol% K. Similar colours were obtained to the porcelain on-glaze colours prepared using $K_2CO_3$ when using low to intermediate K dopant levels, up to around 1.80mol% K. Markedly stronger and darker on-glaze colours were obtained when using higher initial mol% K levels (>2.0mol%), as KF, in comparison with the pale colours prepared using $K_2CO_3$. The fluoride may act as mineraliser in this case, helping to promote the formation of stronger colours.

TABLE 2C

| Earthenware on-glaze colour coordinates | | | | | |
|---|---|---|---|---|---|
| Example number | L | a | b | C | H |
| 12 | 41.04 | 26.51 | -0.09 | 26.51 | 359.80 |
| 13 | 41.46 | 30.65 | 5.37 | 31.12 | 9.93 |
| 14 | 48.04 | 32.47 | 11.48 | 34.44 | 19.47 |
| 11 | 48.31 | 34.23 | 20.76 | 40.03 | 31.24 |
| 15 | 52.51 | 34.95 | 19.57 | 40.05 | 29.25 |
| 16 | 54.61 | 36.17 | 14.56 | 38.99 | 21.93 |
| 17 | 57.18 | 37.45 | 9.68 | 38.68 | 14.50 |
| 18 | 64.61 | 31.92 | 5.41 | 32.38 | 9.61 |

A similar colour range was produced on earthenware to that produced on porcelain.

**EXAMPLE 19: Varying the $ZrO_2$ source to zirconium carbonate**

The preparative route for a Ag and K doped $ZrO_2$ pigmentary material starting with 10.797mol% Ag and 10.441mol% K is provided. In this case, zirconium carbonate was used as the $ZrO_2$ source.

1. 44.258g of zirconium carbonate (45.19% $ZrO_2$, Magnesium Elektron 93/175/312) was ball milled with 3.068g of $Ag_2CO_3$, 1.25g of KF and 50ml of acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1. A lavender/pink powder was obtained, with colour coordinates; L = 49.53, a = 22.04, b = -8.53, C = 23.64 and H = 338.85. Chemical analysis of the material identified 0.76% Ag (K undetermined) contained in the $ZrO_2$ lattice. This powder produced a pink colour in on-glaze application on porcelain, with colour coordinates; L = 58.64, a = 33.16, b = 8.15, C = 34.15 and H = 13.81.

### EXAMPLES 20 - 25: Ag and Li doped $ZrO_2$

### EXAMPLE 20

The preparative route for a Ag and Li doped $ZrO_2$ pigmentary material starting with 7.344mol% Ag and 0.819mol% Li is provided.

1. 55.944g of zirconium hydroxide (71.500% $ZrO_2$) was ball milled with 3.008g of $Ag_2O$, 0.107g of $Li_2CO_3$ and 50ml of acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1. A pinkish purple powder was obtained, with colour coordinates; L = 36.35, a = 20.57, b = -15.82, C = 25.95 and H = 322.44. Chemical analysis of the material identified 1.05% Ag and 0.022% Li, which corresponds to 1.193mol% Ag and 0.389mol% Li, retained in the $ZrO_2$ lattice. This powder produced a pinkish purple colour in on-glaze application on porcelain, with colour coordinates; L = 50.66, a = 28.44, b = -7.09, C = 29.31 and H = 346.00.

### EXAMPLES 21 - 25: Varying the Li loading, as $Li_2CO_3$

Ag and Li doped $ZrO_2$ pigmentary materials were prepared starting with a range of Li loadings, varying from 0.408 to 4.68 lmol%, as shown in Table 3. The Ag:$ZrO_2$ ratio was kept constant throughout The samples were prepared following the experimental procedure described in Example 20, with the $Li_2CO_3$ content altered accordingly. Powder colour coordinates of the acid washed material are given in Table 3A and corresponding porcelain on-glaze colour coordinates in the majority of cases are given in Table 3B. Data obtained in Example 20 are included for comparison. The weight% Ag and Li determined *via* wet chemical analysis of the acid washed product are also provided in Table 3A, together with the corresponding mol percentages.

## TABLE 3A

Initial mol% Li and Ag, powder colour coordinates and weight and mol% Ag and Li after acid washing

| Example number | Mol% Li | Mol% Ag | L | a | b | C | H | %Ag after acid wash | %Li after acid wash | Mol% Ag after acid wash | Mol% Li after acid wash |
|---|---|---|---|---|---|---|---|---|---|---|---|
| 21 | 0.408 | 7.374 | 32.64 | 18.67 | -15.71 | 24.40 | 319.92 | 1.60 | 0.010 | 1.821 | 0.177 |
| 20 | 0.819 | 7.344 | 36.35 | 20.57 | -15.82 | 25.95 | 322.44 | 1.05 | 0.022 | 1.193 | 0.389 |
| 22 | 1.220 | 7.314 | 49.91 | 21.50 | -15.45 | 26.48 | 324.30 | 0.33 | 0.022 | 0.375 | 0.389 |
| 23 | 1.812 | 7.270 | 65.00 | 10.19 | -1.85 | 10.36 | 349.71 | 1.03 | 0.022 | 1.171 | 0.389 |
| 24 | 2.374 | 7.229 | 65.63 | 10.12 | -2.03 | 10.32 | 348.68 | 1.11 | 0.028 | 1.260 | 0.494 |
| 25 | 4.681 | 7.058 | 62.80 | 8.01 | -1.20 | 8.10 | 351.45 | 1.77 | 0.063 | 1.996 | 1.104 |

EP 0 741 172 A1

A range of pinkish purple through lavender/pink, pale pink, to pale pink/grey powder colours were obtained with increasing initial Li dopant.

TABLE 3B

| Porcelain on-glaze colour coordinates | | | | | |
|---|---|---|---|---|---|
| Example number | L | a | b | C | H |
| 21 | 49.14 | 26.64 | -6.60 | 27.45 | 346.08 |
| 20 | 50.66 | 28.44 | -7.09 | 29.31 | 346.00 |
| 22 | 65.58 | 24.31 | -7.79 | 25.52 | 342.24 |
| 23 | 83.36 | 5.74 | -1.39 | 5.91 | 346.43 |
| 25 | 83.80 | 4.33 | -0.26 | 4.34 | 356.59 |

A range of pinkish purple, to pink with a purplish tinge, to very pale purplish pink porcelain on-glaze colours were produced with increasing initial mol% Li.

### EXAMPLES 26-31: Ag and Rb doped $ZrO_2$

### EXAMPLE 26

The preparative route for a Ag and Rb doped $ZrO_2$ pigmentary material starting with 7.314mol% Ag and 1.222mol% Rb is provided.

1. 55.944g of zirconium hydroxide (71.500% $ZrO_2$) was ball milled with 3.008g of $Ag_2O$, 0.501g of $Rb_2CO_3$ and 50ml of acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1. A purplish pink powder was obtained, with colour coordinates; L = 39.27, a = 25.85, b = -8.00, C = 27.06 and H = 342.81. Chemical analysis of the material identified 1.52% Ag and 0.26% Rb, which corresponds to 1.731mol% Ag and 0.374mol% Rb, retained in the $ZrO_2$ lattice. This powder produced a reddish peach colour in on-glaze application on porcelain, with colour coordinates; L = 48.46, a = 32.17, b = 5.61, C = 32.66 and H = 9.89.

The acid washed material was analysed by transmission electron microscopy. Amorphous regions of Ag and Rb were identified in rounded cavities of 6-40nm size in the $ZrO_2$ lattice. The Ag and Rb species were found to vibrate on exposure to the electron beam, with no movement of the cavity boundaries noted. This sample was also assessed by electron probe microanalysis. An even distribution of Ag and Rb was identified throughout the $ZrO_2$ distribution map, with no agglomeration of Ag or Rb species detected.

### EXAMPLES 27 - 31: Varying the Rb loading, as $Rb_2CO_3$

Ag and Rb doped $ZrO_2$ pigmentary materials were prepared starting with a range of Rb loadings, varying from 1.222 to 10.727mol%, as shown in Table 4. The Ag:$ZrO_2$ ratio was kept constant throughout. The samples were prepared following the experimental procedure described in Example 26, with the $Rb_2CO_3$ content altered accordingly. Powder colour coordinates of the acid washed material are given in Table 4. The weight% Ag and Rb determined *via* wet chemical analysis of the acid washed product are also provided, together with the corresponding mol percentages. Data obtained in Example 26 are included for comparison.

## TABLE 4

Initial mol% Rb and Ag, powder colour coordinates and weight and mol% Rb and Ag after acid washing.

| Example number | Mol% Rb | Mol% Ag | L | a | b | C | H | %Ag after acid wash | %Rb after acid wash | Mol% Ag after acid wash | Mol% Rb after acid wash |
|---|---|---|---|---|---|---|---|---|---|---|---|
| 26 | 1.222 | 7.314 | 39.27 | 25.85 | -8.00 | 27.06 | 342.81 | 1.52 | 0.26 | 1.731 | 0.374 |
| 27 | 1.807 | 7.271 | 36.84 | 22.64 | -4.45 | 23.08 | 348.89 | 1.22 | 0.30 | 1.389 | 0.431 |
| 28 | 2.378 | 7.228 | 39.14 | 21.60 | -3.36 | 21.86 | 351.17 | 0.89 | 0.30 | 1.014 | 0.431 |
| 29 | 4.681 | 7.058 | 46.38 | 18.97 | -7.85 | 20.53 | 337.51 | 0.49 | 0.32 | 0.559 | 0.460 |
| 30 | 7.237 | 6.869 | 53.16 | 12.91 | -10.85 | 16.87 | 319.96 | 0.25 | 0.33 | 0.285 | 0.475 |
| 31 | 10.727 | 6.610 | 62.27 | 8.02 | -10.85 | 13.49 | 306.45 | 0.15 | 0.18 | 0.171 | 0.259 |

A range of purplish pink through purplish peach, lavender/peach, lavender/pink to pale lavender powder colours were obtained with increasing initial Rb content. Wet chemical analysis of the acid washed powder identified a gradual decrease in weight% Ag retained in the $ZrO_2$ lattice with increasing initial mol% Rb.

The lavender/peach powder prepared starting with 7.228mol% Ag and 2.378mol% Rb, Example 28, produced a peach colour in on-glaze application on porcelain, with colour coordinates; L = 60.43, a = 25.40, b = 15.32, C = 29.67 and H = 31.09.

## EXAMPLES 32-35: Ag and Cs doped Ag/ZrO$_2$

## EXAMPLE 32

The preparative route for a Ag and Cs doped $ZrO_2$ pigmentary material starting with 7.314mol% Ag and 1.223mol% Cs is provided.

1. 56.360g of zirconium hydroxide (70.972% $ZrO_2$) was ball milled with 3.008g of $Ag_2O$, 0.707g of $Cs_2CO_3$ and 50ml of acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1. A purplish pink powder was obtained, with colour coordinates; L = 38.22, a = 25.47, b = -6.33, C = 26.25 and H = 346.05. Chemical analysis of the material identified 1.57% Ag and 0.35% Cs, which corresponds to 1.790mol% Ag and 0.324mol% Cs, retained in the $ZrO_2$ lattice. This powder produced a reddish peach colour in on-glaze application on porcelain with colour coordinates; L = 47.65, a = 31.09, b = 6.61, C = 31.78 and H = 12.00.

## EXAMPLES 33 - 35: Varying the Cs loading, as Cs$_2$CO$_3$

Ag and Cs doped $ZrO_2$ pigmentary materials were prepared starting with a range of Cs loadings, varying from 1.223 to 4.681mol%, as shown in Table 5. The Ag:$ZrO_2$ ratio was kept constant throughout The samples were prepared following the experimental procedure outlined in Example 32, with the $Cs_2CO_3$ content altered accordingly. Powder colour coordinates of the acid washed material are given in Table 5. The weight% Ag and Cs determined *via* wet chemical analysis of the acid washed material are also provided, together with the corresponding mol percentages. Data obtained in Example 32 are included for comparison.

## TABLE 5

Initial mol% Cs and Ag, powder colour coordinates and weight and mol% Ag and Cs after acid washing

| Example number | Mol% Cs | Mol% Ag | L | a | b | C | H | %Ag after acid wash | %Cs after acid wash | Mol% Ag after acid wash | Mol% Cs after acid wash |
|---|---|---|---|---|---|---|---|---|---|---|---|
| 32 | 1.223 | 7.314 | 38.22 | 25.47 | -6.33 | 26.25 | 346.05 | 1.57 | 0.35 | 1.790 | 0.324 |
| 33 | 1.809 | 7.270 | 38.04 | 23.00 | -3.94 | 23.34 | 350.27 | 1.33 | 0.47 | 1.517 | 0.435 |
| 34 | 2.378 | 7.228 | 39.57 | 22.14 | -3.27 | 22.38 | 351.60 | 1.08 | 0.50 | 1.232 | 0.463 |
| 35 | 4.681 | 7.058 | 42.68 | 18.68 | -8.01 | 20.33 | 336.78 | 0.62 | 0.50 | 0.708 | 0.463 |

A range of purplish pink through purplish peach and lavender/peach to lavender/pink powder colours were obtained with increasing initial mol% Cs. Wet chemical analysis of the acid washed powder identified a gradual decrease in weight% Ag retained in the $ZrO_2$ lattice with increasing initial Cs content. The %Cs retained after acid washing increased to a maximum for samples prepared starting with 2.378mol% Cs and then remained constant.

The purplish peach powder prepared starting with 7.270mol% Ag and 1.809mol% Cs, Example 33, produced a peach colour in on-glaze application on porcelain, with a slight reddish tinge, with colour coordinates; L = 55.44, a = 28.92, b = 12.89, C = 31.66 and H = 24.02.

### EXAMPLES 36 to 39: Multi-alkali metal-doped $ZrO_2$

### EXAMPLE 36: Ag, K and Na doped $ZrO_2$

The preparative route for a Ag, Na and K doped $ZrO_2$ pigmentary material starting with 7.317mol% Ag, 0.574mol% Na and 0.612mol% K is provided.

1. 56.360g of zirconium hydroxide (70.972% $ZrO_2$) was ball milled for 5 hours with 3.008g of $Ag_2O$, 0.150g of $K_2CO_3$, 0.108g of $Na_2CO_3$ and 50ml of acetone in a 1 pint (0.57 litre) ball mill.

2. The acetone was evaporated off and the powder dry mixed in a mortar and pestle for 10-15 minutes.

3. The sample was then fired and acid washed as described in Example 1. A purplish pink powder was obtained, with colour coordinates; L = 36.97, a = 23.08, b = -11.30, C = 25.70 and H = 333.90. Chemical analysis of the material identified 1.53% Ag, 0.06% K and 0.05% Na, which corresponds to 1.738mol% Ag, 0.188mol% K and 0.266mol% Na, retained in the $ZrO_2$ lattice. This powder produced a reddish peach colour, with a slight purplish tinge, in on-glaze application on porcelain, with colour coordinates; L = 46.46, a = 30.12, b = 2.55, C = 30.22 and H = 4.84.

### EXAMPLE 37: Ag, K and Rb doped $ZrO_2$

The preparative route for a Ag, K and Rb doped $ZrO_2$ pigmentary material starting with 7.314mol% Ag, 0.612mol% K and 0.612mol% Rb is provided.

1. 56.360g of zirconium hydroxide (70.972% $ZrO_2$) was ball milled for 5 hours with 3.008 of $Ag_2O$, 0.150g of $K_2CO_3$, 0.251g of $Rb_2CO_3$ and 50ml of acetone in a 1 pint (0.57 litre) ball mill.

2. The acetone was evaporated off and the powder dry mixed in a mortar and pestle for 10-15 minutes.

3. The sample was then fired and acid washed as described in Example 1. A purplish pink powder was obtained, with colour coordinates; L = 37.65, a = 24.24, b = -9.88, C = 26.18 and H = 337.82. Chemical analysis of the material identified 1.49% Ag, 0.06% K and 0.121% Rb, which corresponds to 1.695mol% Ag, 0.188mol% K and 0.174mol% Rb, retained in the $ZrO_2$ lattice. This powder produced a reddish peach colour in on-glaze application on porcelain, with colour coordinates; L = 47.97, a = 32.06, b = 4.44, C = 32.36 and H = 7.88.

### EXAMPLE 38: Ag, K and Na doped $ZrO_2$

The preparative route for a Ag, Na and K doped $ZrO_2$ pigmentary material starting with 7.225mol% Ag, 1.210mol% Na and 1.210mol% K is provided.

1. 57.392g of zirconium hydroxide (69.696% $ZrO_2$) was ball milled for 5 hours with 3.008g $Ag_2O$, 1.227g of KNa tartrate and 50ml acetone in a 1 pint (0.57 litre) ball mill.

2. The acetone was evaporated off and the powder dry mixed in a mortar and pestle for 10-15 minutes.

3. The sample was then fired and acid washed as described in Example 1. A peach/pink powder was produced with colour coordinates; L = 47.74, a = 25.92, b = -3.44, C = 26.15 and H = 352.45. Chemical analysis of the material identified 0.98% Ag, 0.09% Na and 0.09% K, which corresponds to 1.111mol% Ag, 0.479mol% Na and 0.282mol% K, retained in the $ZrO_2$ lattice. This powder produced an orange/peach colour in on-glaze application on porcelain, with colour coordinates; L = 56.52, a = 30.59, b = 20.61, C = 36.88 and H = 33.97.

### EXAMPLE 39: Ag, K and Na doped ZrO$_2$

The preparative route for a Ag, Na and K doped ZrO$_2$ pigmentary material starting with 7.314mol% Ag, 0.613mol% Na and 0.613mol% K is provided.

Example 38 was followed but in this case using 0.614g of KNa tartrate. A purplish pink powder was obtained with colour coordinates; L = 36.67, a = 22.44, b = -10.74, C = 24.88 and H = 334.43. Chemical analysis of the material identified 1.39% Ag, 0.05% Na and 0.06% K, which corresponds to 1.579mol% Ag, 0.267mol% Na and 0.188mol% K, retained in the ZrO$_2$ lattice. This powder produced a reddish peach colour with a slight purplish tinge in on-glaze application on porcelain, with colour coordinates; L = 47.91, a = 30.90, b = 1.67, C = 30.94 and H = 3.09.

### EXAMPLES 40-54: Multi-doped ZrO$_2$

Ag and K doped ZrO$_2$ samples were prepared with an additional dopant from Mg, Y, Sr, Sn, Al, Ce, Cr, W and V, in Examples 40-54. The Ag:ZrO$_2$ ratio was held constant throughout these series of experiments. The samples produced generally exhibited a colour change and/or a change in the polymorphic monoclinic:tetragonal ZrO$_2$ ratio, accompanied by an extent of X-ray peak shifting, on incorporating the additional dopants in the ZrO$_2$ lattice. The content of monoclinic and tetragonal ZrO$_2$, determined via X-ray diffraction of these multi-doped ZrO$_2$ samples, was compared with that of Ag and K doped ZrO$_2$, prepared in Example 60, which contains 98.7% monoclinic ZrO$_2$ and 1.3% tetragonal ZrO$_2$.

When referring to dopants being contained in the ZrO$_2$ lattice, this expression is used to cover the dopants being at lattice or interstitial sites, or at cavities in the ZrO$_2$ lattice produced as a result of ZrO$_2$ crystallisation, or at more than one of these positions. This expression also covers the formation of solid solutions with the dopant ions, or oxides of the dopant ions, and ZrO$_2$.

### EXAMPLES 40 and 41: Ag, K and Mg doped ZrO$_2$

### EXAMPLE 40

The preparative route for a Ag, K and Mg doped ZrO$_2$ pigmentary material starting with 6.990mol% Ag, 1.169mol% K and 4.431mol% Mg is provided.

1. 57.392g of zirconium hydroxide (69.696% ZrO$_2$) was ball milled for 5 hours with 3.008g of Ag$_2$O, 0.300g K$_2$CO$_3$, 1.503g of 3MgCO$_3$.Mg(OH)$_2$.3H$_2$O and 50ml of acetone in a 1 pint (0.57 litre) ball mill.

2. The acetone was evaporated off and the powder dry mixed in a mortar and pestle for 10-15 minutes.

3. The sample was then fired and acid washed as described in Example 1. A pink/lavender powder was produced with colour coordinates; L = 54.46, a = 18.85, b = -9.70, C = 21.19 and H = 332.77. Chemical analysis of the powder identified 0.46% Ag, 0.07% K and 0.41% Mg. This powder produced a pale peach/pink colour in on-glaze application on porcelain, with colour coordinates; L = 76.57, a = 13.89, b = 9.41, C = 16.78 and H = 34.10. X-ray diffraction characterisation of this sample detected 72.6% monoclinic ZrO$_2$ and 27.4% tetragonal ZrO$_2$ as the sole crystalline phases, with no Mg related phase identified. The Ag, K and Mg ions are accordingly contained in the ZrO$_2$ lattice.

### EXAMPLE 41

The preparative route for a Ag, K and Mg doped ZrO$_2$ pigmentary material starting with 6.169mol% Ag, 1.032mol%K and 15.646mol% Mg is provided.

Example 40 was followed but in this case using 6.012g of 3MgCO$_3$.Mg(OH)$_2$.3H$_2$O and 75ml of acetone. A pinkish lavender powder was obtained with colour coordinates; L = 57.28, a = 16.57, b = -9.96, C = 19.33 and H = 328.99. Chemical analysis of the powder identified 0.42% Ag, 0.07% K and 0.62% Mg. X-ray diffraction characterisation of this sample detected 39.6% monoclinic ZrO$_2$ and 60.4% tetragonal ZrO$_2$ as the sole crystalline phases, with no additional Mg related phase identified. A marked increase in %tetragonal ZrO$_2$ was noted with increasing Mg content (cf Example 40).

This sample was analysed by transmission electron microscopy. Amorphous regions of Ag, K and Mg were detected in rounded cavities of 5-35nm size in the monoclinic ZrO$_2$ lattice. The Ag, K and Mg species vibrated in these cavities on exposure to the electron beam. Vacant cavities were identified in the tetragonal ZrO$_2$ phase, with no evidence of Ag, K or Mg species. A proportion of the Mg was however found to have migrated into the tetragonal ZrO$_2$ lattice.

The Ag, K and a proportion of the Mg ions were therefore found to be contained in the monoclinic $ZrO_2$ polymorph in Ag, K and Mg doped $ZrO_2$.

## EXAMPLES 42 and 43: Ag, K and Y doped $ZrO_2$

### EXAMPLE 42

The preparative route for a Ag, K and Y doped $ZrO_2$ pigmentary material starting with 7.222mol% Ag, 1.208mol% K and 1.252mol% Y is provided.

1. 57.392g of zirconium hydroxide (69.696% $ZrO_2$) was ball milled for 5 hours with 3.008g of $Ag_2O$, 0.300g of $K_2CO_3$, 0.927g of $Y_2(CO_3)_3.3H_2O$ and 50ml acetone in a 1 pint (0.57 litre) ball mill.

2. The acetone was evaporated off and the powder dry mixed in a mortar and pestle for 10-15 minutes.

3. The sample was then fired and acid washed as described in Example 1. A purplish pink powder was produced with colour coordinates; L = 38.18, a = 24.42, b = -10.36, C = 26.53 and H = 337.00. Chemical analysis of the powder identified 1.47% Ag, 0.11% K and 0.18% Y. X-ray diffraction characterisation of this sample detected 97.7% monoclinic $ZrO_2$ and 2.3% tetragonal $ZrO_2$ as the sole crystalline phases, with no Y related phase identified. Accordingly the Ag, K and Y ions are contained in the $ZrO_2$ lattice.

### EXAMPLE 43

The preparative route for a Ag, K and Y doped $ZrO_2$ pigmentary material starting with 6.961mol% Ag, 1.164mol% K and 4.826mol% Y is provided.

Example 42 was followed but in this case using 3.706g of $Y_2(CO_3)_3.3H_2O$. A purplish pink powder was obtained with colour coordinates; L = 37.13, a = 22.54, b = -11.08, C = 25.12 and H = 333.83. Chemical anlaysis of the powder identified 1.60%Ag, 0.11% K and 0.58% Y. This powder produced a reddish peach colour in on-glaze application on porcelain, with colour coordinates; L = 50.78, a = 31.90, b = 3.16, C = 32.06 and H = 5.66. X-ray diffraction characterisation of this sample detected 92.9% monoclinic $ZrO_2$ and 7.1% tetragonal $ZrO_2$ As the sole crystalline phases, with no Y related phase identified. An increase in %tetragonal $ZrO_2$ was noted with increasing Y (*cf* Example 42).

## EXAMPLES 44 and 45: Ag, K and Sr doped $ZrO_2$

### EXAMPLE 44

The preparative route for a Ag, K and Sr doped $ZrO_2$ pigmentary material starting with 7.221mol% Ag, 1.208mol% K and 1.270mol% Sr is provided.

1. 57.392g of zirconium hydroxide (69.696% $ZrO_2$) was ball milled for 5 hours with 3.008g of $Ag_2O$, 0.300g $K_2CO_3$, 0.674g $SrCO_3$ and 50ml acetone in a 1 pint (0.57 litre) ball mill.

2. The acetone was evaporated off and the powder dry mixed in a mortar and pestle for 10-15 minutes.

3. The sample was then fired and acid washed as described in Example 1. A purplish pink powder was produced with colour coordinates; L = 37.16, a = 23.24, b = -8.98, C = 24.91 and H = 338.88. Chemical analysis of the powder identified 1.23% Ag, 0.09% K and 0.41% Sr. X-ray diffraction characterisation of this sample detected 97.7% monoclinic $ZrO_2$ and 2.3% tetragonal $ZrO_2$ as the sole crystalline phases. Accordingly, the Ag, K and Sr ions are contained in the $ZrO_2$ lattice.

### EXAMPLE 45

The preparative route for a Ag, K and Sr doped $ZrO_2$ pigmentary material starting with 6.710mol% Ag, 1.122mol% K and 8.261mol% Sr is provided.

Example 44 was followed but in this case using 4.718g of $SrCO_3$. A lavender/purple powder was obtained with colour coordinates; L = 37.75, a = 13.41, b = -11.93, C = 17.95 and H = 318.32. Chemical analysis of the powder identified 1.14% Ag, 0.09% K and 3.41% Sr. X-ray diffraction characterisation of this sample detected monoclinic $ZrO_2$ and tetragonal $ZrO_2$ together with a proportion of SrO. A greater proportion of tetragonal than monoclinic $ZrO_2$ was

present but the numerical values of the two could not be determined in this case due to X-ray peak overlaps with the SrO and tetragonal $ZrO_2$ phases. It is believed that the Ag, K and a proportion of the Sr ions are contained in the $ZrO_2$ lattice in order to provide the colour and $ZrO_2$ polymorphic change exhibited by the sample.

This sample was analysed by transmission electron microscopy (TEM). Amorphous regions of Ag, K and Sr were detected in rounded cavities of 5-25nm size in the monoclinic $ZrO_2$ lattice. The Ag, K and Sr species vibrated in these cavities on exposure to the electron beam. Vacant cavities were identified in the tetragonal $ZrO_2$ phase, with no evidence of Ag, K or Sr species. A proportion of the Sr was however found to have migrated into the tetragonal $ZrO_2$ lattice. No evidence of a SrO phase was identified by TEM thus highlighting the small content of this phase produced. An occasional Ag colloid particle was detected on the surface of the $ZrO_2$ accounting for less than 1% of the Ag contained in the sample.

The Ag, K and a proportion of the Sr ions were therefore found to be contained in the monoclinic $ZrO_2$ polymorph in Ag, K and Sr doped $ZrO_2$.

### EXAMPLES 46 and 47 : Ag, K and Sn doped ZrO$_2$

### EXAMPLE 46

The preparative route for a Ag, K and Sn doped $ZrO_2$ pigmentary material starting with 7.269mol% Ag, 1.218mol% K and 0.609mol% Sn is provided.

1. 57.392g of zirconium hydroxide (69.696% $ZrO_2$) was ball milled for 5 hours with 3.008g $Ag_2O$, 0.650g of $K_2SnO_3$.$3H_2O$ and 50ml acetone in a 1 pint (0.57 litre) ball mill.

2. The acetone was evaporated off and the powder dry mixed in a mortar and pestle for 10-15 minutes.

3. The sample was then fired and acid washed as described in Example 1. A purplish pink powder was produced with colour coordinates; L = 38.98, a = 26.09, b = -9.65, C = 27.82 and H = 339.71. Chemical analysis of the powder identified 1.44% Ag, 0.12% K and 0.61% Sn. This powder produced a reddish peach colour in on-glaze application on porcelain, with colour coordinates; L = 49.41, a = 33.06, b = 3.00, C = 33.19 and H = 5.19. X-ray diffraction characterisation of this sample detected 99.1% monoclinic $ZrO_2$ and 0.9% tetragonal $ZrO_2$ as the sole crystalline phases, with no Sn related phase identified. Accordingly, the Ag, K and Sn ions are contained in the $ZrO_2$ lattice.

### EXAMPLE 47

The preparative route for a Ag, K and Sn doped $ZrO_2$ pigmentary material starting with 7.139mol% Ag, 2.392mol% K and 1.196mol% Sn is provided.

Example 46 was followed but in this case using 1.300g of $K_2SnO_3$.$3H_2O$. A purplish peach/pink powder was obtained with colour coordinates; L = 45.50, a = 22.88, b = -5.05, C = 23.43 and H = 347.56. Chemical analysis of the powder identified 0.75% Ag, 0.14% K and 1.55% Sn. This powder produced a pinkish peach colour in on-glaze application on porcelain, with colour coordinates; L = 60.63, a = 27.55, b = 13.57, C = 30.71 and H = 26.21. X-ray diffraction characterisation of this sample detected 96.9% monoclinic $ZrO_2$ and 3.1% tetragonal $ZrO_2$ as the sole crystalline phases, with no additional Sn related phase identified. An increase in %tetragonal $ZrO_2$ was noted with increasing Sn content (*cf* Example 46).

### EXAMPLES 48 and 49 : Ag, K and Al doped ZrO$_2$

### EXAMPLE 48

The preparative route for a Ag, K and Al doped $ZrO_2$ pigmentary material starting with 7.021mol% Ag, 1.174mol% K and 4.008mol% Al is provided.

1. 57.392g of zirconium hydroxide (69.696% $ZrO_2$) was ball milled for 5 hours with 3.008g $Ag_2O$, 0.300g $K_2CO_3$, 0.889g AlO(OH) [Bacosol, grade 2C, from BA Chemicals Ltd.] and 50ml acetone in a 1 pint (0.57 litre) ball mill.

2. The acetone was evaporated off and the powder dry mixed in a mortar and pestle for 10-15 minutes.

3. The sample was then fired and acid washed as described in Example 1. A purplish pink powder was produced with a slight peach tinge, with colour coordinates; L = 32.98, a = 21.41, b = -7.13, C = 22.57 and H = 341.59.

Chemical analysis of the powder identified 1.61% Ag and 1.16%Al (K undetermined). X-ray diffraction characterisation of this sample detected 98.9% monoclinic $ZrO_2$ and 1.1% tetragonal $ZrO_2$ as the sole crystalline phases, with no Al related phase identified. Accordingly, the Ag, K and Al ions are contained in the $ZrO_2$ lattice.

## EXAMPLE 49

The preparative route for a Ag, K and Al doped $ZrO_2$ pigmentary material starting with 5.659mol% Ag, 0.946mol% K and 22.623mol% Al is provided.

Example 48 was followed but in this case using 6.225g of AlO(OH). A greyish pink/purple powder was obtained with colour coordinates; L = 34.27, a = 17.26, b = -7.68, C = 18.89 and H = 336.01. Chemical analysis of the powder identified 1.96% Ag and 5.36% Al (K undetermined). X-ray diffraction characterisation of this sample detected 92.0% monoclinic $ZrO_2$ and 8.0% tetragonal $ZrO_2$ as the sole crystalline phases, with no additional Al related phase identified. An increase in %tetragonal $ZrO_2$ was noted with increasing Al content (cf. Example 48).

## EXAMPLES 50 and 51 : Ag, K and Ce doped $ZrO_2$

## EXAMPLE 50

The preparative route for a Ag, K and Ce doped $ZrO_2$ pigmentary material starting with 7.255mol% Ag, 1.213mol% K and 0.798mol% Ce is provided.

1. 57.392g of zirconium hydroxide (69.696% $ZrO_2$) was ball milled for 5 hours with 3.008g of $Ag_2O$, 0.300g of $K_2CO_3$, 0.594g of $Ce(OH)_4$ and 50ml acetone in a 1 pint (0.57 litre) ball mill.

2. The acetone was evaporated off and the powder dry mixed in a mortar and pestle for 10-15 minutes.

3. The sample was then fired and acid washed as described in Example 1. A purplish pink powder was produced with colour coordinates; L = 36.23, a = 23.32, b = -9.83, C = 25.31 and H = 337.14. Chemical analysis of the powder identified 1.50% Ag and 0.94% Ce (K undetermined). X-ray diffraction characterisation of this sample detected 98.7% monoclinic $ZrO_2$ and 1.3% tetragonal $ZrO_2$ with a trace amount of $CeO_2$.

## EXAMPLE 51

The preparative route for a Ag, K and Ce doped $ZrO_2$ pigmentary material starting with 6.924mol% Ag, 1.158mol% K and 5.330mol% Ce is provided.

Example 50 was followed but in this case using 4.159g of $Ce(OH)_4$. A purple/pink powder was obtained with colour coordinates; L = 34.50, a = 17.95, b = -9.87, C = 20.48 and H = 331.20. Chemical analysis of the powder identified 1.45% Ag and 5.99% Ce (K undetermined). X-ray diffraction characterisation of this sample detected 95.7% monoclinic $ZrO_2$ and 4.3% tetragonal $ZrO_2$ accompanied by a proportion of $CeO_2$. It is believed that the Ag, K and a proportion of the Ce ions are contained in the $ZrO_2$ lattice in order to provide the colour and $ZrO_2$ polymorphic change exhibited by this sample.

## EXAMPLE 52: Ag, K and Cr doped $ZrO_2$

The preparative route for a Ag, K and Cr doped $ZrO_2$ pigmentary material starting with 7.055mol% Ag, 1,180mol% K and 3.528mol% Cr is provided.

1. 56.390g of zirconium hydroxide (70.934% $ZrO_2$) was ball milled for 5 hours with 4.305g of $Ag_2CrO_4$, 0.300g of $K_2CO_3$ and 50ml of acetone in a 1 pint (0.57 litre) ball mill.

2. The acetone was evaporated off and the powder dry mixed in a mortar and pestle for 10-15 minutes.

3. The sample was then fired and acid washed as described in Example 1. A brown/pink powder was obtained with colour coordinates; L = 48.36, a = 10.58, b = 2.94, C = 10.98 and H = 15.54. Chemical analysis of the powder identified 2.52% Ag and 1.14% Cr (K undetermined). This powder produced a purple/lavender colour in on-glaze application on porcelain, with colour coordinates; L = 54.72, a = 9.93, b = -3.34, C = 10.47 and H = 341.39. X-ray diffraction characterisation of this sample detected 99.2% monoclinic $ZrO_2$ and 0.8% tetragonal $ZrO_2$ as the sole crystalline phases, with no Cr related phase detected. Accordingly, the Ag, K and Cr ions are contained in the $ZrO_2$

lattice.

### EXAMPLE 53: Ag. K and W doped ZrO$_2$

The preparative route for a Ag, K and W doped ZrO$_2$ pigmentary material starting with 7.056mol% Ag, 1.180mol% K and 3.528mol% W is provided.

1. 56.390g of zirconium hydroxide (70.934% ZrO$_2$) was ball milled for 5 hours with 6.017g of Ag$_8$W$_4$O$_{16}$, 0.300g of K$_2$CO$_3$ and 50ml of acetone in a 1 pint (0.57 litre) ball mill.

2. The acetone was evaporated off and the powder dry mixed in a mortar and pestle for 10-15 minutes.

3. The sample was then fired and acid washed as described in Example 1. A pink/lavender powder was obtained with colour coordinates; L = 54.44, a = 15.23, b = -7.93, C = 17.17 and H = 332.50. Chemical analysis of the powder identified 1.02% Ag, 0.12% K and 5.16% W. X-ray diffraction characterisation of this sample detected 93.6% monoclinic ZrO$_2$ and 6.4% tetragonal ZrO$_2$ together with a proportion of a W containing phase (thought to be WO$_3$.H$_2$O). It is believed that the Ag, K and a proportion of the W ions are contained in the ZrO$_2$ lattice in order to provide the colour and ZrO$_2$ polymorphic change exhibited by the sample.

### EXAMPLE 54: Ag, K and V doped ZrO$_2$

The preparative route for a Ag, K and V doped ZrO$_2$ pigmentary material starting with 6.815mol% Ag, 1.140mol% K and 6.815mol% V is provided.

1. 56.390g of zirconium hydroxide (70.934% ZrO$_2$) was ball milled for 5 hours with 5.368g of AgVO$_3$, 0.300g of K$_2$CO$_3$ and 50ml acetone in a 1 pint (0.57 litre) ball mill.

2. The acetone was evaporated off and the powder dry mixed in a mortar and pestle for 10-15 minutes.

3. The sample was then fired as described in Example 1. A yellow/beige powder was produced, which was then acid washed as outlined in Example 1. A pale pink/beige powder was obtained with colour coordinates; L = 76.09, a = 6.30, b = 6.47, C = 9.03 and H = 45.77. Chemical analysis of the powder identified 0.53% Ag and 0.40% V (K undetermined). X-ray diffraction characterisation of this sample detected 98.2% monoclinic ZrO$_2$ and 1.8% tetragonal ZrO$_2$ as the sole crystalline phases, with no additional V related phase identified. Accordingly, the Ag, K and V ions are contained in the ZrO$_2$ lattice.

### EXAMPLE 55: Acetone versus water milled samples

The preparative route for Ag and K doped ZrO$_2$ pigmentary material starting with 9.237mol% Ag and 0.923mol% K is provided. The samples were prepared by ball milling the samples in acetone (Method A) or water (Method B).

### Method A

1. 70.098g of zirconium hydroxide (71.329% ZrO$_2$) was ball milled for 5 hours with 4.834g of Ag$_2$O, 0.288g of K$_2$CO$_3$ and 50ml acetone in a 1 pint (0.57 litre) ball mill.

2. The acetone was evaporated off and the powder dry mixed in a mortar and pestle for 10-15 minutes.

3. The sample was then fired and acid washed as described in Example 1. A purplish pink powder was obtained with colour coordinates; L = 34.81, a = 23.37, b = -12.13, C = 26.33 and H = 332.56. Chemical analysis of the material identified 1.59%Ag and 0.08%K, which corresponds to 1.809mol% Ag and 0.251mol% K, contained in the ZrO$_2$ lattice. This powder produced a reddish purple colour in on-glaze application on porcelain, with colour coordinates; L = 49.41, a = 31.65, b = -1.71, C = 31.70 and H = 356.91.

### Method B

Method A was followed but in this case the starting materials were ball milled in 50ml distilled water instead of acetone. A purplish pink powder was obtained with colour coordinates; L = 36.90, a = 24.28, b = -11.48, C = 26.86 and H = 334.69 (slightly lighter and redder than the acetone milled sample). Chemical analysis of the material identified 1.71%Ag and 0.08% K, which corresponds to 1.945mol% Ag and 0.251mol%K, contained in the $ZrO_2$ lattice. This powder produced a reddish purple colour in on-glaze application on porcelain, with colour coordinates; L = 47.52, a = 32.94, b = -0.07, C = 32.94 and H = 359.87 (slightly darker, redder and stronger than the acetone milled equivalent).

### EXAMPLE 56: Undried versus dried $K_2CO_3$

$K_2CO_3$ is known to be hygroscopic in nature. Ideally this starting material should therefore be dried before weighing it out. The preparative route for Ag and K doped $ZrO_2$ pigmentary material starting with 7.314mol% Ag and 1.223mol% K is provided using undried (Method A) and dried (Method B) $K_2CO_3$ for comparison.

### Method A

1. 56.390g of zirconium hydroxide (70.934% $ZrO_2$) was ball milled with 3.008g of $Ag_2O$, 0.300g of $K_2CO_3$ and 50ml acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1. A purplish pink powder was obtained with colour coordinates; L = 36.15, a = 23.89, b = -8.59, C = 25.38 and H = 340.23. Chemical analysis of the material identified 1.55% Ag and 0.11% K, which corresponds to 1.763mol% Ag and 0.345mol% K, retained in the $ZrO_2$ lattice. This powder produced a reddish peach colour in on-glaze application on porcelain, with colour coordinates; L = 49.82, a = 29.64, b = 2.81, C = 29.77 and H = 5.41.

### Method B

Method A was repeated but in this case using 0.300g of dried $K_2CO_3$. Two samples of $K_2CO_3$ were dried at 200°C for 24 hours. They were found to contain an average of 93.036% $K_2CO_3$. A purplish pink powder was obtained using this dried $K_2CO_3$, with colour coodinates; L = 38.53, a = 25.80, b = -8.98, C = 27.32 and H = 340.82 (slightly lighter and pinkier than the powder produced in Method A). Chemical analysis of the material identified 1.57% Ag and 0.12% K, which corresponds to 1.785mol% Ag and 0.376mol% K, retained in the $ZrO_2$ lattice. This powder produced a reddish peach colour in on-glaze application on porcelain, with colour coordinates; L = 49.95, a = 32.18, b = 4.40, C = 32.48 and H = 7.78 (slightly stronger, redder and cleaner than that produced in Method A).

### EXAMPLE 57: Hand Ground

The preparative route for a Ag and K doped $ZrO_2$ pigmentary material starting with 7.314mol% Ag and 1.223mol% K is provided.

1. 28.199g zirconium hydroxide (70.924% $ZrO_2$), 1.504g $Ag_2O$ and 0.150g $K_2CO_3$ were hand ground with acetone in an agate pestle and mortar for 45 minutes.

2. The sample was left to stand for *ca* 4 hours to ensure the removal of any trace acetone by evaporation.

3. The powder was then fired and acid washed as described in Example 1. A purplish pink powder was produced with colour coordinates; L = 41.16, a = 24.31, b = -12.03, C = 27.13 and H = 333.68. Chemical analysis of the material identified 1.16% Ag and 0.09% K, which corresponds to 1.320mol% Ag and 0.283mol% K, contained in the $ZrO_2$ lattice.

### EXAMPLE 58: Aqueous Evaporation

The preparative route for a Ag and K doped $ZrO_2$ pigmentary material starting with 7.314mol% Ag and 1.223mol% K is provided.

1. 56.398g of zirconium hydroxide (70.924% $ZrO_2$) was suspended in 200ml of deionised water and stirred for 30 minutes.

2. 4.409g of $AgNO_3$ was dissolved in 20ml of deionised water and was added to the suspension, together with washings.

3. 0.300g of $K_2CO_3$ was dissolved in 20ml of deionised water and was added to the aforementioned suspension, together with washings.

4. The mixture was then heated at *ca* 87°C, with continual stirring, to evaporate the water.

5. The resultant powder cake was dried at 90°C.

6. The powder was then dry mixed in a mortar and pestle. It was then fired and acid washed as described in Example 1. A lavenderish purple powder was obtained with colour coordinates; L=41.14, a = 15.59, b = -17.27, C = 23.27 and H = 312.07. Chemical analysis of the material identified 0.55% Ag and 0.04% K, which corresponds to 0.627mol% Ag and 0.126mol% K, contained in the $ZrO_2$ lattice.

## EXAMPLE 59: Dry mixed versus paste mixed $K_2CO_3$

The preparative route for Ag and K doped $ZrO_2$ pigmentary material starting with 7.314mol% Ag and 1.223mol% K is provided. The samples were prepared by dry mixing (Method A) or paste mixing (Method B) $K_2CO_3$ with a ground mixture of zirconium hydroxide and $Ag_2O$.

A bulk mixture of zirconium hydroxide and $Ag_2O$ was prepared as follows: 1kg of zirconium hydroxide (68% $ZrO_2$) was vibro milled with 51.130g of $Ag_2O$ and 600ml of water for 4 hours, to an average particle size of 1.9µm ± 0.1µm. The material was then dried at 80°C, disintegrated and the $Ag/ZrO_2$ content calculated thermogravimetrically by heating the sample to 800°C, with a 30 minute soak.

## Method A

1. 0.300g of $K_2CO_3$ was added to the amount of zirconium hydroxide/$Ag_2O$ mixture corresponding to 40g $ZrO_2$ in a coffee grinder. The mixture was ground for 30 seconds.

2. The sample was then fired and acid washed as described in Example 1. A pinkish purple powder was obtained with colour coordinates; L = 36.54, a = 18.65, b = -16.36, C = 24.81 and H = 318.75. Chemical analysis of the material identified 1.76% Ag (K undetermined) retained in the $ZrO_2$ lattice. This powder produced a strong pinkish purple colour in onglaze application on porcelain, with colour coordinates; L = 41.07, a = 27.31, b = -5.24, C = 27.80 and H = 349.13. The on-glaze transfers were hand printed through a 120T screen.

## Method B

1. 0.300g of $K_2CO_3$ was dissolved in 5ml of water and was added to the amount of zirconium hydroxide/$Ag_2O$ mixture corresponding to 40g of $ZrO_2$ in a coffee grinder. The mixture was ground for 30 seconds.

2. The resultant damp paste was then fired and acid washed as described in Example 1. A purplish pink powder was obtained with colour coordinates; L = 36.88, a = 24.69, b = -8.41, C = 26.09 and H = 341.20 (significantly redder than the powder produced in Method A). Chemical analysis of the material identified 1.68% Ag(K undetermined) retained in the $ZrO_2$ lattice. This powder produced a strong reddish peach colour in on-glaze application on porcelain, with a slight purplish tinge, with colour coordinates; L = 44.13, a = 31.04, b = 2.85, C = 31.17 and H = 5.25 (significantly redder than that produced in Method A). The on-glaze transfers were hand printed through a 120T screen.

## EXAMPLES 60-78: Varying the Firing Conditions

A standard firing cycle of 860°C for 1 hour, with a ramp rate of 6.67°C/minute from room temperature was employed for Ag and alkali metal doped $ZrO_2$ pigmentary material preparation. The samples were furnace cooled to room temperature. A number of variations to this standard firing cycle were investigated, as described in Examples 61-78.

## EXAMPLE 60: Sample preparation

The preparative route for a Ag and K doped $ZrO_2$ pigmentary material, starting with 9.211mol% Ag and 1.198mol% K is provided. In this case the sample was fired using the standard firing conditions as stated above (and in Example 1). Identical reaction conditions, and batches of starting materials, were employed in Examples 61-78 with some aspect of the firing condition altered as specified in the following Examples. In each case the resultant fired samples were acid washed as outlined in Example 1.

1. 56.053g of zirconium hydroxide (71.361% $ZrO_2$) was ball milled with 3.867g of $Ag_2O$, 0.300g of $K_2CO_3$ and 45ml of acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1. A purplish pink powder was produced with colour coordinates; L = 36.78, a = 24.36, b = -10.35, C = 26.47 and H = 336.98. Chemical analysis of the material identified 1.61% Ag and 0.10% K, which corresponds to 1.830mol% Ag and 0.314mol% K, retained in the $ZrO_2$ lattice. This powder produced a reddish peach colour in on-glaze application on porcelain, with colour coordinates; L = 49.82, a = 33.81, b = 2.53, C=33.91 and H = 4.27.

The on-glaze tranfers were printed through a 120T screen. This screen was replaced during these series of experiments investigating firing variations, with Examples 76-78 printed using this new screen. In order to provide a more accurate comparison of the on-glaze colours the present sample, prepared using standard firing conditions, was also printed through this new screen. A reddish peach on-glaze colour was produced with colour coordinates; L = 46.70, a = 33.77, b = 2.95, C = 33.90 and H = 5.00. A darker and slightly redder on-glaze colour was produced in comparison to that obtained using the older 120T screen.

### EXAMPLES 61-69: Varying the Firing Temperature

A series of Ag and K doped $ZrO_2$ pigmentary materials were prepared by firing the starting materials at 550, 650, 750, 810, 860, 910, 1000, 1200, 1400 and 1600°C for 1 hour, with a ramp rate of 6.67°C/minute from room temperature. The samples were furnace cooled.

A wide range of acid washed powder colours were produced, ranging from grey (550°C), to greyish purple (650°C), strong purplish pink (750-860°C), purplish pink (910-1000°C), pink (1200°C), to pale pink (1400°C) and very pale pink/lavender (1600°C). The colour coordinates of these powders are provided in Table 6A.

## TABLE 6A

Calcination temperature (°C), powder colour coordinates, weight and mol% Ag and K after acid washing, and %monoclinic and tetragonal $ZrO_2$

| Example number | Firing temp. (°C) | Powder colour coordinates | | | | | %Ag after acid wash | %K after acid wash | Mol% Ag after acid wash | Mol% K after acid wash | % mono-clinic $ZrO_2$ | % tetrag-onal $ZrO_2$ |
|---|---|---|---|---|---|---|---|---|---|---|---|---|
| | | L | a | b | C | H | | | | | | |
| 61 | 550 | 46.82 | 2.27 | -3.74 | 4.37 | 301.34 | 6.42 | 0.28 | 7.224 | 0.869 | 4.1 | 95.9 |
| 62 | 650 | 30.52 | 6.51 | -8.03 | 10.34 | 309.02 | 3.81 | 0.25 | 4.306 | 0.779 | 6.8 | 93.2 |
| 63 | 750 | 33.16 | 22.53 | -7.28 | 23.68 | 342.10 | 2.57 | 0.13 | 2.917 | 0.407 | 95.4 | 4.6 |
| 64 | 810 | 33.07 | 22.78 | -9.15 | 24.55 | 338.12 | 1.97 | | | | | |
| 60 | 860 | 36.78 | 24.36 | -10.35 | 26.47 | 336.98 | 1.61 | 0.10 | 1.830 | 0.314 | 98.7 | 1.3 |
| 65 | 910 | 37.86 | 26.24 | -11.27 | 28.56 | 336.77 | 1.39 | | | | | |
| 66 | 1000 | 42.48 | 25.14 | -13.08 | 28.34 | 332.51 | 0.88 | 0.06 | 1.003 | 0.189 | 99.0 | 1.0 |
| 67 | 1200 | 56.24 | 29.61 | -9.77 | 31.18 | 341.74 | 0.26 | 0.02 | 0.297 | 0.063 | 99.2 | 0.8 |
| 68 | 1400 | 79.53 | 16.51 | -5.52 | 17.41 | 341.51 | <0.1 | <0.01 | <0.114 | <0.032 | 99.6 | 0.4 |
| 69 | 1600 | 88.84 | 3.88 | -2.62 | 4.68 | 325.98 | <0.1 | <0.01 | <0.114 | <0.032 | 100.0 | 0.0 |

EP 0 741 172 A1

Wet chemical analysis of the acid washed pigmentary materials detected a continual decrease in %Ag and %K contained in the $ZrO_2$ lattice with increasing firing temperature, as indicated in Table 6A. The K content of the samples produced in Examples 64 and 65 was undetermined. Samples fired at 1400-1600°C contain only trace amounts of Ag and K but they still produce coloured powders, pale pink and very pale lavender/pink respectively.

The samples were assessed by X-ray diffraction. The % monoclinic and tetragonal $ZrO_2$ were calculated, the results of which are given in Table 6A. Samples fired at 550-650°C produced tetragonal $ZrO_2$ as their main crystalline phase, whereas samples fired at the higher temperatures of 750-1400°C produced mainly monoclinic $ZrO_2$. 100% monoclinic $ZrO_2$ was obtained for the sample fired at 1600°C. A continual increase in monoclinic crystallite size was recorded with increasing firing temperature, from 5.3-115.0nm.

These samples produced a wide range of colours in on-glaze application on porcelain. Colour coordinates for the majority of these samples are provided in Table 6B. The on-glaze colours produced ranged from dirty purple/buff (550-650°C), to reddish peach with a purplish tinge (750°C), to reddish peach (810-910°C), to paler reddish peach (1000°C), to pink (1200°C) to very pale pink (1400°C).

Ag and K doped pigmentary materials can accordingly be prepared with a calcination temperature at least in the range of 550-1600°C, with darker, redder and stronger on-glaze colours prepared in the range 750-1000°C, in particular on calcining at 810-910°C. A nice clean pink on-glaze colour was however produced at 1200°C.

TABLE 6B

| Porcelain on-glaze colour coordinates | | | | | | |
|---|---|---|---|---|---|---|
| Example number | Firing Temp (°C) | L | a | b | C | H |
| 61 | 550 | 51.63 | 21.80 | 0.11 | 21.80 | 0.30 |
| 62 | 650 | 48.32 | 19.95 | -1.02 | 19.97 | 357.07 |
| 63 | 750 | 46.63 | 31.29 | 1.13 | 31.31 | 2.06 |
| 64 | 810 | 47.34 | 33.31 | 2.58 | 33.41 | 4.42 |
| 60 | 860 | 49.82 | 33.81 | 2.53 | 33.91 | 4.27 |
| 65 | 910 | 51.13 | 34.93 | 2.89 | 35.05 | 4.73 |
| 66 | 1000 | 53.85 | 33.51 | 2.78 | 33.63 | 4.75 |
| 67 | 1200 | 67.68 | 29.02 | 1.65 | 29.07 | 3.26 |
| 68 | 1400 | 83.54 | 7.17 | 1.76 | 7.38 | 13.82 |

## EXAMPLES 70 - 72: Varying the Ramp Rate

The standard ramp rate of 6.67°C/minute from room temperature to 860°C, employed for Ag and K doped $ZrO_2$ pigmentary material preparation, takes roughly 2 hours 5 minutes to complete. Samples were also prepared with varying rates of rise to temperature; at 13.9, 3.5 and 1.7°C/minute, with the sample taking roughly 1, 4 and 8 hours to reach 860°C respectively.

Comparable purplish pink acid washed powders were produced in each case, the colour coordinates of which are given in Table 7A together with the %Ag contained in the $ZrO_2$ lattice. The K content of these samples was undetermined.

TABLE 7A

| Powder colour coordinates and weight% Ag after acid washing | | | | | | | |
|---|---|---|---|---|---|---|---|
| Example number | Time to temp. (hours) | Powder colour coordinates | | | | | %Ag after acid wash |
| | | L | a | b | C | H | |
| 70 | 1 | 36.41 | 24.43 | -9.95 | 26.38 | 337.83 | 1.75 |
| 60 | 2 | 36.78 | 24.36 | -10.35 | 26.47 | 336.98 | 1.61 |
| 71 | 4 | 36.00 | 26.58 | -8.77 | 27.99 | 341.73 | 1.67 |
| 72 | 8 | 36.77 | 25.90 | -8.93 | 27.40 | 340.97 | 1.76 |

These samples produced comparable reddish peach colours in on-glaze application on porcelain, the colour coordinates of which are provided in Table 7B.

TABLE 7B

| Porcelain on-glaze colour coordinates | | | | | | |
|---|---|---|---|---|---|---|
| Example number | Time to temp. (hours) | L | a | b | C | H |
| 70 | 1 | 48.96 | 32.94 | 2.51 | 33.03 | 4.36 |
| 60 | 2 | 49.82 | 33.81 | 2.53 | 33.91 | 4.27 |
| 71 | 4 | 51.79 | 33.98 | 2.32 | 34.06 | 3.91 |
| 72 | 8 | 50.38 | 34.83 | 4.13 | 35.07 | 6.77 |

The rate of rise to temperature would therefore not appear to be critical over the heating rate studied, of 1-8 hours duration.

**EXAMPLES 73-75: Varying the Soak Time**

Ag and K doped $ZrO_2$ pigmentary materials were prepared by firing the starting materials at 860°C with an extended soak time of 5, 10 and 20 hours, and compared with the standard sample fired for a 1 hour period.

Purplish pink acid washed powder colours were produced in each case, with the colours becoming paler and pinkier with increasing soak time. The colour coordinates of these powders are provided in Table 8A.

EP 0 741 172 A1

Wet chemical analysis data of the acid washed pigmentary samples are also provided in Table 8A. The %Ag

## TABLE 8A

Soak time (hours), powder colour coordinates, and weight and mol% Ag and K after acid washing

| Example number | Soak time (hours) | Powder colour coordinates | | | | | %Ag after acid wash | %K after acid wash | Mol% Ag after acid wash | Mol% K after acid wash |
|---|---|---|---|---|---|---|---|---|---|---|
| | | L | a | b | C | H | | | | |
| 60 | 1 | 36.78 | 24.36 | -10.35 | 26.47 | 336.98 | 1.61 | 0.10 | 1.830 | 0.314 |
| 73 | 5 | 39.17 | 25.15 | -12.18 | 27.94 | 334.17 | 1.42 | 0.08 | 1.616 | 0.251 |
| 74 | 10 | 39.98 | 25.90 | -12.17 | 28.62 | 334.83 | 1.28 | 0.08 | 1.457 | 0.251 |
| 75 | 20 | 40.34 | 26.32 | -12.27 | 29.04 | 335.00 | 1.19 | 0.07 | 1.355 | 0.220 |

retained in the $ZrO_2$ lattice was found to gradually decrease with increasing soak time, with a corresponding small decrease in %K.

These samples produced reddish peach colours in on-glaze application on porcelain, the colour coordinates of which are provided in Table 8B. Slightly paler and bluer on-glaze colours were obtained with an increased soak time.

TABLE 8B

| Porcelain onglaze colour coordinates | | | | | | |
|---|---|---|---|---|---|---|
| Example number | Soak time (hours) | L | a | b | C | H |
| 60 | 1 | 49.82 | 33.81 | 2.53 | 33.91 | 4.27 |
| 73 | 5 | 52.11 | 34.06 | 1.84 | 34.11 | 3.08 |
| 74 | 10 | 52.88 | 34.70 | 1.89 | 34.75 | 3.12 |
| 75 | 20 | 52.13 | 34.98 | 2.15 | 35.05 | 3.52 |

Shorter soak times at 860°C are therefore preferred for Ag and K doped $ZrO_2$ preparation.

### EXAMPLES 76 and 77 : Varying the Cooling Rate

The effect of varying the cooling rate of Ag and K doped $ZrO_2$ pigmentary material was investigated, and compared with the standard sample, Example 60, which was furnace cooled to room temperature. Air quenched (Example 76) and water cooled (Example 77) samples were investigated.

### EXAMPLE 76 : Air cooled sample

The sample was fired at 860°C for a 1 hour period, and was then air quenched to room temperature, ie the sample was removed from the furnace at 860°C. It was then acid washed as described in Example 1. A purplish pink powder was obtained with colour coordinates; L = 35.39, a = 24.71, b = -10.10, C = 26.69 and H = 337.78 (slightly paler and pinkier than that produced in Example 60). Chemical analysis of the material identified 1.51% Ag (K undetermined) contained in the $ZrO_2$ lattice. This powder produced a reddish peach colour in on-glaze application on porcelain, with colour coordinates; L = 48.10, a = 33.72, b = 3.22, C = 33.88 and H = 5.45 (slightly paler and redder than the on-glaze colour produced in Example 60). The on-glaze transfer were printed through a new 120T screen.

### EXAMPLE 77 : Water cooled sample

The sample was fired at 860°C for 1 hour. It was then removed from the furnace at 860°C and directly immersed into 500ml of cold distilled water. When cool, 500ml of AnalaR nitric acid was then added in order to produce a 1:1 $HNO_3$:$H_2O$ solution. The sample was then acid washed as described in Example 1. A purplish pink powder was obtained with colour coordinates; L = 32.02, a = 25.54, b = -10.24, C = 27.52 and H = 338.16 (slightly darker, stronger and redder than the powder produced in Example 60). Chemical analysis of the material identified 1.58% Ag (K undetermined) contained in the $ZrO_2$ lattice. This powder produced a reddish peach colour in on-glaze application on porcelain, with colour coordinates; L = 49.97, a = 33.12, b = 3.15, C = 33.27 and H = 5.44 (slightly lighter and redder than that produced in Example 60). The on-glaze transfers were printed through a new 120T screen.

### EXAMPLE 78: Firing the Sample Covered

A Ag and K doped $ZrO_2$ pigmentary material was prepared as described in Example 60 but in this case the sample was fired in a glazed porcelain crucible covered with a ceramic biscuit tile, rather than the standard uncovered firing. A purplish pink powder was obtained with colour coordinates; L = 38.15, a = 25.70, b = -11.29, C = 28.07 and H = 336.29 (slightly lighter and pinkier than the equivalent powder fired uncovered, Example 60). Chemical analysis of the material identified 1.51% Ag (K undetermined) retained in the $ZrO_2$ lattice. This powder produced a reddish peach colour in on-glaze application on porcelain, with colour coordinates; L = 48.87, a = 34.08, b = 2.01, C = 34.14 and H = 3.37 (slightly paler and bluer than the on-glaze colour produced in Example 60). The on-glaze transfers were printed through a new 120T screen.

### EXAMPLE 79: Calcination in Oxygen

The preparative route for a Ag and K doped $ZrO_2$ pigmentary material starting with 7.314mol% Ag and 1.223mol% K is provided. In this case the sample was fired in oxygen.

1. 55.999g of zirconium hydroxide (71.430% $ZrO_2$) was ball milled with 3.008g of $Ag_2O$, 0.300g of $K_2CO_3$ and 50ml acetone in a 1 pint (0.57 litre) ball mill for 5 hours.

2. The acetone was evaporated off and the powder dry mixed in a mortar and pestle for 10-15 minutes.

3. A portion of this sample, about 10g, was then transferred to a silica boat and fired in a tube furnace at 890°C for 1 hour in a dynamic oxygen atmosphere. A ramp rate of 6.67°C/minute was employed, and the sample furnace cooled in the oxygen atmosphere. The fired powder was then acid washed as described in Example 1. A lavenderish pink powder was obtained with colour coordinates; L = 47.38, a = 24.59, b = -7.98, C = 25.85 and H = 342.02. Chemical analysis of the material identified 1.21% Ag and 0.09% K, which corresponds to 1.377mol% Ag and 0.283mol% K, contained in the $ZrO_2$ lattice.

### EXAMPLES 80-87: Effect of Milling

The effect of milled the prefired material for varying lengths of time was investigated, by ball milling (Examples 80 and 81) and vibro milling (Examples 82-87) techniques.

### EXAMPLES 80 and 81: Ball milled samples

Ag and K doped $ZrO_2$ pigmentary materials were prepared starting with 9.211mol% Ag and 1.198mol% K, according to the preparative route given in Example 60 but in this case varying the ball milling time to 1 and 24 hours. The results obtained were compared with the sample which was ball milled for a 5 hour period, Example 60.

The average particle size ($d_{50}$) of the dry prefired material was measured using a Malvern Mastersizer X particle size analyser, and the results are shown in Table 9A. A small portion of the sample was dispersed in distilled water and placed in an ultrasonic bath for 15 minutes prior to recording any measurements. The average particle size decreased from 4.72 to 1.85µm on ball milling the starting materials for 1-24 hours respectively.

Pinkish purple acid washed powder colours were produced which turned darker and markedly redder with increased ball milling, or reduced prefired particle size. The colour coordinates of these powders are provided in Table 9A.

EP 0 741 172 A1

## TABLE 9A

Time in the ball mill (hours), average particle size of the prefired material (µm), powder colour coordinates, and weight and mol% Ag and K after acid washing

| Example number | Time in ball mill (hours) | $d_{50}$ (µm) | Powder colour coordinates | | | | | %Ag after acid wash | %K after acid wash | Mol% Ag after acid wash | Mol% K after acid wash |
|---|---|---|---|---|---|---|---|---|---|---|---|
| | | | L | a | b | C | H | | | | |
| 80 | 1 | 4.72 | 37.49 | 24.23 | -12.26 | 27.16 | 333.17 | 1.38 | 0.08 | 1.571 | 0.251 |
| 60 | 5 | 2.57 | 36.78 | 24.36 | -10.35 | 26.47 | 336.98 | 1.61 | 0.10 | 1.830 | 0.314 |
| 81 | 24 | 1.85 | 35.68 | 24.84 | -7.60 | 25.98 | 342.98 | 1.76 | 0.10 | 2.001 | 0.314 |

Wet chemical analysis of the acid washed pigmentary materials identified an increase in %Ag retained in the $ZrO_2$ lattice with increased ball milling, accompanied by a slight increase in %K, as indicated in Table 9A.

These samples produced reddish peach colours in on-glaze application on porcelain, the colour coordinates of which are provided in Table 9B. The on-glaze colours turned progressively redder with increased pre-fired ball milling. A paler on-glaze colour was produced with 1 hour milling whereas darker colours were produced with 5-24 hours ball milling, *ie* for samples prepared with pre-fired particle sizes of 1.85-2.57μm.

TABLE 9B

| Porcelain on-glaze colour coordinates | | | | | |
|---|---|---|---|---|---|
| Example number | L | a | b | C | H |
| 80 | 51.30 | 34.51 | 1.74 | 34.55 | 2.89 |
| 60 | 46.70 | 33.77 | 2.95 | 33.90 | 5.00 |
| 81 | 47.68 | 32.67 | 3.56 | 32.87 | 6.21 |

## EXAMPLES 82-87: Vibro milled samples

The preparative route for Ag and K doped $ZrO_2$ pigmentary material starting with 7.297mol% Ag and 1.223mol% K is provided. The samples were prepared by vibro milling a zirconium hydroxide and $Ag_2O$ mixture for varying lengths of time, and then paste mixing with $K_2CO_3$.

## Preparative route

1. 2kg of zirconium hydroxide (68% $ZrO_2$) was vibro milled with 102g of $Ag_2O$ and 1200ml of tap water for an 8 hour period. 150g portions of the resultant slurry were removed after 1, 2, 3, 4, 6 and 8hrs milling. The average particle size ($d_{50}$) of the slurry was then measured by a Coulter Counter LS130 particle size analyser.

2. The samples were dried at 80°C, disintegrated and the Ag/$ZrO_2$ content calculated thermogravimetrically by heating the samples to 800°C, with a 30 minute soak.

3. 0.300g of $K_2CO_3$ was then dissolved in 5ml of water and was added to the amount of vibro milled zirconium hydroxide/$Ag_2O$ mixture corresponding to 40g $ZrO_2$ in a coffee grinder. The mixture was ground for 30 seconds. This process was repeated for each vibro milled sample.

4. The resultant damp pastes were then fired and acid washed as described in Example 1.

The average particle sizes ($d_{50}$) of the vibro milled zirconium hydroxide/$Ag_2O$ mixtures are shown in Table 10A. A decrease in average particle size from 4.3-1.4μm was recorded on vibro milling the zirconium hydroxide/$Ag_2O$ mixture for 1 to 8 hours respectively.

Purplish pink powders were produced in each case which turned progressively lighter and stronger with increased vibro milling. A shift in Hue angle (H) to redder shades was noted for samples prepared with a decreasing particle size from 4.3-2.3μm. A further reduction in prefired particle size, from 2.3-1.4μm, yielded a slight blue shade change. Colour coordinates of these powders are shown in Table 10A.

EP 0 741 172 A1

## TABLE 10A

Time in the vibro mill (hours), average particle size of the vibro milled material (μm), powder colour coordinates and weight% Ag after acid washing.

| Example number | Time in vibro mill (hours) | $d_{50}$ (μm) | Powder colour coordinates | | | | | %Ag after acid wash |
|---|---|---|---|---|---|---|---|---|
| | | | L | a | b | C | H | |
| 82 | 1 | 4.3 | 30.08 | 20.75 | -9.79 | 22.94 | 334.74 | 1.58 |
| 83 | 2 | 2.8 | 30.82 | 22.58 | -8.97 | 24.30 | 338.34 | 1.68 |
| 84 | 3 | 2.3 | 34.37 | 24.39 | -9.40 | 26.14 | 338.91 | 1.66 |
| 85 | 4 | 1.9 | 36.71 | 24.77 | -10.12 | 26.76 | 337.77 | 1.69 |
| 86 | 6 | 1.5 | 38.66 | 24.94 | -10.62 | 27.11 | 336.93 | 1.55 |
| 87 | 8 | 1.4 | 41.27 | 25.69 | -11.21 | 28.03 | 336.43 | 1.44 |

The weight% Ag retained in $ZrO_2$ lattice after acid washing was found to increase to a maximum for samples prepared with a pre-fired particle size of 1.9-2.8μm, as indicated in Table 10A. The K content of the samples was undetermined.

These samples produced a range of reddish peach colours in on-glaze application on porcelain, the colour coordinates of which are provided in Table 10B. A continual shift in hue angle from bluer shades to redder shades was noted with increased grinding, accompanied by an increase in Chroma. The darkest on-glaze colours were produced by samples prepared with a pre-fired particle size of 1.9-2.3μm. Paler on-glaze colours were produced by samples prepared with larger or smaller pre-fired particle sizes.

TABLE 10B

| Porcelain on-glaze colour coordinates | | | | | |
|---|---|---|---|---|---|
| Example number | L | a | b | C | H |
| 82 | 47.58 | 30.43 | -0.28 | 30.43 | 359.46 |
| 83 | 46.50 | 31.53 | 0.55 | 31.54 | 1.00 |
| 84 | 46.20 | 31.99 | 1.37 | 32.02 | 2.46 |
| 85 | 46.14 | 32.23 | 1.73 | 32.28 | 3.07 |
| 86 | 47.49 | 33.09 | 2.27 | 33.16 | 3.93 |
| 87 | 48.20 | 33.28 | 2.38 | 33.46 | 4.09 |

**EXAMPLES 88 - 93: Varying the Ag loading**

Ag and K doped $ZrO_2$ pigmentary materials were prepared starting with a range of Ag loadings, varying from 1.115 to 31.078mol%, as indicated in Table 11A. The $K:ZrO_2$ ratio was kept constant throughout. The samples were prepared following the experimental procedure described in Example 56, Method A, with the $Ag_2O$ content altered accordingly. The acid washed powder colour coordinates are shown in Table 11A, with corresponding porcelain on-glaze colour coordinates given in Table 11B. The weight % Ag and K determined via wet chemical analysis of the acid washed product are also shown in Table 11A, together with corresponding mol percentages. Data obtained in Examples 56, Method A and Example 60 are included for comparison.

## TABLE 11A

Initial mol% K and Ag, powder colour coordinates, and weight and mol% Ag and K after acid washing.

| Example number | Mol% K | Mol% Ag | Powder colour coordinates | | | | | %Ag after acid wash | %K after acid wash | Mol% Ag after acid wash | Mol% K after acid wash |
|---|---|---|---|---|---|---|---|---|---|---|---|
| | | | L | a | b | C | H | | | | |
| 88 | 1.305 | 1.115 | 72.55 | 12.65 | -6.38 | 14.17 | 333.23 | 0.47 | 0.17 | 0.535 | 0.533 |
| 89 | 1.263 | 4.315 | 37.33 | 20.91 | -10.39 | 23.35 | 333.57 | 1.25 | 0.14 | 1.421 | 0.439 |
| 56, Method A | 1.223 | 7.314 | 36.15 | 23.89 | -8.59 | 25.38 | 340.23 | 1.55 | 0.11 | 1.763 | 0.345 |
| 60 | 1.198 | 9.211 | 36.78 | 24.36 | -10.35 | 26.47 | 336.98 | 1.61 | 0.10 | 1.830 | 0.314 |
| 90 | 1.186 | 10.131 | 33.80 | 23.95 | -11.24 | 26.46 | 334.85 | 2.57 | 0.09 | 2.919 | 0.282 |
| 91 | 1.077 | 18.398 | 35.16 | 20.74 | -15.53 | 25.91 | 323.18 | 1.87 | 0.05 | 2.128 | 0.157 |
| 92 | 0.986 | 25.272 | 50.15 | 16.09 | -16.45 | 23.01 | 314.36 | 1.15 | 0.04 | 1.310 | 0.126 |
| 93 | 0.910 | 31.078 | 48.22 | 13.81 | -15.46 | 20.73 | 311.78 | 1.31 | <0.01 | - | - |

A range of pale purplish pink (1.115mol%), to purplish pink with a blueish tinge (4.315mol%), purplish pink (7.314-10.131mol%), pink/purple (18.398mol%) and pinkish lavender (25.272-31.078mol%) powder colours were obtained with increasing initial Ag loading. The pigmentary colours became darker, stronger and redder and with increased initial Ag loading, up to around 7.314 to 10.131mol%Ag, and then turned paler, weaker and bluer.

Wet chemical analysis of the acid washed powder identified a gradual decrease in %K retained in the $ZrO_2$ lattice with increasing initial Ag loading. In contrast, the %Ag retained in the $ZrO_2$ lattice increased to a maximum for the sample prepared starting with 10.131mol% Ag, and then decreased.

Table 11B

| Porcelain on-glaze colour coordinates | | | | | |
|---|---|---|---|---|---|
| Example number | L | a | b | C | H |
| 88 | 79.00 | 10.75 | 2.61 | 11.06 | 13.63 |
| 89 | 54.85 | 27.22 | 1.42 | 27.26 | 2.99 |
| 56, Method A | 49.82 | 29.64 | 2.81 | 29.77 | 5.41 |
| 60 | 49.82 | 33.81 | 2.53 | 33.91 | 4.27 |
| 90 | 54.28 | 32.29 | 0.46 | 32.29 | 0.81 |
| 91 | 62.42 | 27.60 | -0.66 | 27.61 | 358.64 |
| 92 | 72.00 | 18.82 | -0.69 | 18.83 | 357.90 |
| 93 | 65.90 | 21.20 | -4.23 | 21.62 | 348.73 |

The on-glaze colours produced ranged from pale pink (1.115mol%), to dirty reddish peach (4.315mol%), strong reddish peach (7.314-9.211mol%), paler reddish peach with a purplish tinge (10.131mol%), pink (18.398mol%), to pale pink (25.272mol%) and lavender/pink (31.078mol%) with increasing initial Ag loading. The darkest, strongest and reddest on-glaze colours were obtained for samples produced with an initial Ag loading of 7.314-9.211mol%.

## EXAMPLES 94 - 107: Varying the Ag source

Ag and K doped $ZrO_2$ pigmentary materials were prepared starting with 7.314mol% Ag and 1.223mol% K in Examples 94-107, using a range of Ag sources.

## EXAMPLE 94: Ag Nitrate

1. 56.390g of zirconium hydroxide (70.934% $ZrO_2$) was ball milled with 4.409g of $AgNO_3$, 0.300g of $K_2CO_3$ and 50ml of acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1. A pink/purple powder was obtained with colour coordinates; L = 33.09, a = 23.59, b = -14.38, C = 27.63 and H = 328.63. Chemical analysis of the material identified 2.01% Ag and 0.07% K, which corresponds to 2.286mol% Ag and 0.220mol% K, contained in the $ZrO_2$ lattice. This powder produced a reddish purple colour in on-glaze application on porcelain, with colour coordinates; L = 50.08, a = 32.68, b = -1.92, C = 32.74 and H = 356.64.

## EXAMPLES 95 - 104: Alternative Ag sources

Ag and K doped $ZrO_2$ pigmentary materials were prepared using a variety of alternative Ag sources in Examples 95-104. These samples were produced following the experimental procedure described in Example 94, with the silver source and content altered accordingly. The resultant acid washed powder colour coordinates are shown in Table 12A, with corresponding porcelain on-glaze colour coordinates, for the majority of these samples, given in Table 12B. The weight% Ag and K determined via wet chemical analysis of the acid washed product are also provided in Table 12A, for a selection of samples, along with corresponding mol percentages. The K content of the samples prepared using $AgNO_2$, Ag lactate, Ag powder and Ag benzoate as the Ag source was undetermined.

## TABLE 12A

Silver source, powder colour coordinates, and weight and mol% Ag and K after acid washing

| Example number | Ag source | Powder colour coordinates | | | | | %Ag after acid wash | %K after acid wash | Mol% Ag after acid wash | Mol% K after acid wash |
|---|---|---|---|---|---|---|---|---|---|---|
| | | L | a | b | C | H | | | | |
| 95 | AgO | 35.18 | 24.79 | -7.95 | 26.03 | 342.22 | 1.71 | 0.12 | 1.944 | 0.376 |
| 96 | Ag acetate | 39.74 | 22.94 | -6.54 | 23.86 | 344.08 | 1.61 | 0.14 | 1.829 | 0.439 |
| 97 | AgF | 37.86 | 20.99 | -10.64 | 23.53 | 333.12 | 1.43 | 0.10 | 1.627 | 0.314 |
| 98 | AgNO$_2$ | 36.83 | 23.88 | -9.49 | 25.70 | 338.33 | 1.41 | | | |
| 99 | Ag citrate | 42.35 | 23.65 | -8.45 | 25.12 | 340.35 | 1.39 | 0.13 | 1.580 | 0.408 |
| 100 | Ag lactate | 41.83 | 22.96 | -5.43 | 23.59 | 346.69 | 1.27 | | | |
| 101 | Ag powder | 45.34 | 22.23 | -10.72 | 24.68 | 334.25 | 0.75 | | | |
| 102 | Ag stearate | 59.22 | 18.95 | -7.03 | 20.21 | 339.64 | 0.41 | 0.09 | 0.467 | 0.283 |
| 103 | Ag benzoate | 60.76 | 18.33 | -7.24 | 19.71 | 338.44 | 0.40 | | | |
| 104 | Ag laurate | 74.68 | 16.15 | -5.77 | 17.15 | 340.36 | 0.16 | 0.07 | 0.182 | 0.220 |

A range of purplish pink powder colours were produced using AgO, Ag acetate, AgNO$_2$ and Ag citrate as the Ag source, with a bluer shade produced using AgF. A purplish pink powder with a peach tinge was produced using Ag lactate, whereas a paler lavenderish pink powder was produced using Ag powder (Johnson Matthey, Cap 9). Ag stearate and Ag benzoate produced purple tinged pink powders, with a pale pink powder obtained using Ag laurate as the Ag source.

Wet chemical analysis of the acid washed powders identified a decrease in %Ag with increasing lightness (L) of the powder colour. The %K retained in the $ZrO_2$ lattice varied from 0.07 to 0.13 weight%.

TABLE 12B

| Porcelain on-glaze colour coordinates | | | | | | |
|---|---|---|---|---|---|---|
| Example number | Ag source | L | a | b | C | H |
| 95 | AgO | 49.35 | 29.97 | 3.11 | 30.13 | 5.92 |
| 96 | Ag acetate | 52.39 | 30.50 | 4.63 | 30.85 | 8.63 |
| 97 | AgF | 52.71 | 23.25 | -2.96 | 23.44 | 352.75 |
| 98 | $AgNO_2$ | 53.33 | 29.28 | 1.84 | 29.34 | 3.60 |
| 99 | Ag citrate | 53.09 | 28.10 | 3.08 | 28.26 | 6.26 |
| 100 | Ag lactate | 56.75 | 29.77 | 4.59 | 30.12 | 8.76 |
| 101 | Ag powder | 61.82 | 24.96 | 0.88 | 24.98 | 2.02 |
| 103 | Ag benzoate | 71.77 | 20.03 | 3.70 | 20.37 | 10.46 |

A range of reddish peach on-glaze colours were produced using AgO, Ag acetate, $AgNO_2$, and Ag citrate as the Ag source, with a paler and redder on-glaze colour obtained using Ag lactate. A dirty pink/purple on-glaze colour was produced using AgF, whereas a pink colour with a purplish tinge was produced using Ag powder. A pale, but clean pink on-glaze colour was produced using Ag benzoate as the Ag source.

### EXAMPLE 105: Ag orthophosphate

Example 94 was followed but in this case using 3.622g of $Ag_3PO_4$ as the Ag source. A dirty lavender/pink powder was obtained with colour coordinates; L = 46.96, a = 19.41, b = -10.94, C = 22.28 and H = 330.59. Chemical analysis of the powder identified 1.37% Ag, 0.23% K and 0.42%P. This powder produced a dirty pink colour with a purplish tinge in on-glaze application on porcelain, with colour coordinates; L = 57.27, a = 24.07, b = -0.08, C = 24.07 and H = 359.81.

X-ray diffraction characterisation of this sample identified 93.2% monoclinic and 6.8% tetragonal $ZrO_2$ as the sole crystalline phases, with no phosphate related phase detected. Accordingly, the Ag, K and P ions are contained within the $ZrO_2$ lattice. The presence of P ions increases the proportion of tetragonal $ZrO_2$ produced (cf. Example 60, Table 6A).

### EXAMPLE 106: Ag suphide

Example 94 was followed but in this case using 3.216g of $Ag_2S$ as the Ag source. A pale purplish pink powder was obtained with colour coordinates; L = 79.47, a = 13.06, b = -6.86, C = 14.75 and H = 332.31. Chemical analysis of the powder identified 0.67% Ag and 0.23% S (K undetermined). This powder produced a pale pink colour with a slight peach tinge in on-glaze application on porcelain, with colour coordinates; L = 75.10, a = 16.36, b = 6.25, C = 17.51 and H = 20.92.

### EXAMPLE 107: Ag sulphate

Example 94 was followed but in this case using 4.047g of $Ag_2SO_4$ as the Ag source. A pale pink/buff powder was obtained with colour coordinates; L = 67.25, a = 14.62, b = -2.72, C = 14.87 and H = 349.44. Chemical analysis of the powder identified 2.09% Ag and 0.43% S (K undetermined). This powder produced a peach/pink colour in on-glaze application on porcelain, with colour coordinates; L = 63.16, a = 23.76, b = 11.22, C = 26.28 and H = 25.28.

### EXAMPLES 108-117: Varying the K source

Ag and K doped $ZrO_2$ pigmentary materials were prepared starting with 7.314mol% Ag and 1.223mol% K in Examples 108-117, using a range of K sources. Where appropriate the K source was dried prior to use, as indicated.

### EXAMPLE 108: Potassium Hydrogen Carbonate

1. 56.398g of zirconium hydroxide (70.924% $ZrO_2$) was ball milled with 3.008g of $Ag_2O$, 0.435g of $KHCO_3$ and 50ml acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1. A purplish pink powder was obtained with colour coordinates; L = 38.57, a = 26.16, b = -8.91, C = 27.64 and H = 341.19. Chemical analysis of the material identified 1.60% Ag and 0.12% K, which corresponds to 1.819mol% Ag and 0.376mol% K, retained in the $ZrO_2$ lattice. This powder produced a reddish peach colour in on-glaze application on porcelain, with colour coordinates; L = 50.62, a = 32.73, b = 4.07, C = 32.99 and H = 7.09.

### EXAMPLES 109-114: Alternative K sources

Ag and K doped $ZrO_2$ pigmentary materials were prepared using a range of alternative K sources in Examples 109-114. These samples were produced following the experimental procedure outlined in Example 108, with the K source and content altered accordingly. The resultant acid washed powder colour coordinates are shown in Table 13A, with corresponding porcelain on-glaze colour coordinates, for the majority of these samples, given in Table 13B. The weight% Ag and K determined via wet chemical analysis of the acid washed product are also provided in Table 13A, along with corresponding mol percentages.

The KCl and K hydrogen phthalate sources were dried at 100°C for 24 hours prior to use, whereas the $KNO_3$ source was dried at 80°C for 24 hours.

## TABLE 13A

Potassium source, powder colour coordinates, and weight and mol% Ag and K after acid washing

| Example number | K source | Powder colour coordinates | | | | | %Ag after acid wash | %K after acid wash | Mol% Ag after acid wash | Mol% K after acid wash |
|---|---|---|---|---|---|---|---|---|---|---|
| | | L | a | b | C | H | | | | |
| 109 | KCl | 41.38 | 22.23 | -3.05 | 22.44 | 352.20 | 2.36 | 0.12 | 2.680 | 0.376 |
| 110 | K acetate | 37.40 | 24.76 | -7.00 | 25.73 | 344.22 | 1.66 | 0.14 | 1.886 | 0.439 |
| 111 | K citrate | 38.67 | 25.22 | -10.49 | 27.32 | 337.41 | 1.56 | 0.13 | 1.773 | 0.408 |
| 112 | $KNO_3$ | 37.93 | 25.18 | -9.08 | 26.76 | 340.17 | 1.54 | 0.11 | 1.751 | 0.345 |
| 113 | K oxalate monohydrate | 39.57 | 25.23 | -9.01 | 26.79 | 340.34 | 1.52 | 0.13 | 1.728 | 0.408 |
| 114 | K hydrogen phthalate | 43.43 | 26.70 | -5.69 | 27.30 | 347.96 | 1.48 | 0.13 | 1.682 | 0.408 |

A range of purplish pink powders were produced using $KNO_3$, K citrate, K oxalate monohydrate and K acetate as the K source. A purplish peach powder was obtained using K hydrogen phthalate, whereas a darker and slightly dirty purplish peach powder was produced using KCl as the K source.

TABLE 13B

| Porcelain on-glaze colour coordinates | | | | | | |
|---|---|---|---|---|---|---|
| Example number | K source | L | a | b | C | H |
| 109 | KCl | 54.66 | 25.01 | 5.40 | 25.59 | 12.17 |
| 110 | K acetate | 48.52 | 31.17 | 4.71 | 31.52 | 8.60 |
| 112 | KNO$_3$ | 52.71 | 31.27 | 3.12 | 31.43 | 5.69 |
| 113 | K oxalate monohydrate | 50.96 | 31.61 | 3.97 | 31.86 | 7.16 |
| 114 | K hydrogen phthalate | 52.63 | 32.98 | 8.27 | 34.00 | 14.08 |

A range of reddish peach on-glaze colours were produced using K acetate, KNO$_3$ and K oxalate monohydrate as the K source, with a yellower reddish peach colour obtained using K hydrogen phthalate. A paler and dirtier reddish peach colour was produced using KCl as the K source.

### EXAMPLE 115: K di-H orthophosphate

A sample of KH$_2$PO$_4$ was dried at 100°C for 24 hours. Example 108 was then followed but in this case using 0.592g of dried KH$_2$PO$_4$ as the K source. A purplish pink powder was obtained with colour coordinates; L = 33.28, a = 19.45, b = -6.84, C = 20.62 and H = 340.63. Chemical analysis of the powder identified 1.94% Ag, 0.17% K and *ca* 0.30% P. This powder produced a dirty pink colour with a purplish tinge in on-glaze application on porcelain, with colour coordinates; L=50.42,a=25.57,b=1.39, C=25.61 and H=3.10.

### EXAMPLE 116: K sulphate

A sample of K$_2$SO$_4$ was dried at 80°C for 24 hours. Example 108 was then followed but in this case using 0.379g of dried K$_2$SO$_4$ as the K source. A dark purplish pink powder was obtained with colour coordinates; L = 33.70, a = 20.36, b = -9.54, C = 22.48 and H = 334.89. Chemical analysis of the powder identified 1.86% Ag, 0.12% K and 0.12% S. This powder produced a dirty purplish peach colour in on-glaze application on porcelain, with colour coordinates; L = 47.68, a = 27.57, b = 0.75, C = 27.58 and H = 1.56.

### EXAMPLE 117: di-K tetraborate

Example 108 was followed but in this case using 0.664g of K$_2$B$_4$O$_7$.4H$_2$O as the K source. A pink powder was obtained with a purplish tinge, with colour coordinates, L = 41.71, a = 24.90, b = -11.92, C = 27.60 and H = 334.42. Chemical analysis of the powder identified 0.73% Ag, 0.07% K and *ca* 0.05% B. This powder produced a pink colour with a slight peach tinge in on-glaze application on porcelain, with colour coordinates; L = 61.73, a = 27.98, b = 5.47, C = 28.51 and H=11.06.

### EXAMPLES 118 - 123: Varying the zirconia source

Ag and K doped ZrO$_2$ pigmentary materials were prepared starting with 7.314mol% Ag and 1.223mol% K in Examples 118-123, using a range of ZrO$_2$ sources. The monoclinic and tetragonal ZrO$_2$ content of the samples was determined *via* X-ray diffraction and compared with that of Ag and K doped ZrO$_2$ prepared using zirconium hydroxide (from Magnesium Elektron, grade XZO 587/03) in Example 60, which contains 98.7% monoclinic ZrO$_2$ and 1.3% tetragonal ZrO$_2$.

### EXAMPLE 118

1. 56.763g of zirconium hydroxide (70.469% ZrO$_2$, from Magnesium Elektron, grade XZO 632/03) was ball milled with 3.008g of Ag$_2$O, 0.300g of K$_2$CO$_3$ and 45ml of acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1. A purplish lavender powder was obtained with colour coordinates; L = 57.33, a = 16.43, b = -13.18, C = 21.07 and H = 321.26. Chemical analysis of the material identified 0.32% Ag and 0.03% K, which corresponds to 0.365mol% Ag and 0.094mol% K, contained in the $ZrO_2$ lattice. This powder produced a pale pink colour in on-glaze application on porcelain, with colour coordinates; L = 74.11, a = 16.57, b = 0.02, C = 16.57 and H = 0.07. X-ray diffraction characterisation of this sample detected 98.1% monoclinic $ZrO_2$ and 1.9% tetragonal $ZrO_2$.

**EXAMPLE 119**

1. 50.767g of zirconium hydroxide (39.396% $ZrO_2$, from Magnesium Elektron, grade XZO 587) was ball milled with 1.504g of $Ag_2O$, 0.150g of $K_2CO_3$ and 45ml of acetone in a 1 pint (0.57 litre) ball mill for 5 hours.

2. The acetone was evaporated off and the powder dry mixed in a mortar and pestle for 10-15 minutes.

3. The sample was then fired and acid washed as described in Example 1, using amounts pro-rata to the $ZrO_2$ equivalent. A peach/pink powder was obtained with colour coordinates; L = 47.45, a = 26.21, b = -4.91, C = 26.67 and H = 349.40. Chemical analysis of the material identified 1.29% Ag and 0.11% K, which corresponds to 1.467mol% Ag and 0.345mol% K, contained in the $ZrO_2$ lattice. This powder produced a pink/peach colour in on-glaze application on porcelain, with colour coordinates; L = 54.44, a = 32.34, b = 10.34, C = 33.96 and H = 17.74. X-ray diffraction characterisation of this sample detected 99.2% monoclinic $ZrO_2$ and 0.8% tetragonal $ZrO_2$.

**EXAMPLE 120**

Example 119 was followed but in this case using 41.451g of zirconium basic carbonate (48.250% $ZrO_2$, from Magnesium Elektron, grade 93/175/312) as the $ZrO_2$ source. A purplish pink powder was obtained with colour coordinates; L = 42.68, a = 23.04, b = -8.70, C = 24.63 and H = 339.32. Chemical analysis of the material identified 1.72% Ag and 0.12% K, which corresponds to 1.955mol% Ag and 0.376mol% K, contained in the $ZrO_2$ lattice. This powder produced a reddish peach colour in on-glaze application on porcelain, with colour coordinates; L = 49.74, a = 30.58, b = 3.50, C = 30.78 and H = 6.54. X-ray diffraction characterisation of this sample detected 98.9% monoclinic $ZrO_2$ and 1.1% tetragonal $ZrO_2$.

**EXAMPLE 121**

Example 119 was followed but in this case using 45.989g of zirconium basic carbonate (43.489% $ZrO_2$, from Mandoval Chemicals, lot 534) as the $ZrO_2$ source. A pale lavender powder was obtained with colour coordinates; L = 76.21, a = 6.73, b = -7.27, C = 9.91 and H = 312.79. Chemical analysis of the powder identified 0.41% Ag, 0.08% K and 0.36% Na. This powder produced a very pale pink colour in on-glaze application on porcelain, with colour coordinates; L = 84.20, a = 3.46, b = 3.67, C = 5.04 and H = 46.69. X-ray diffraction characterisation of this sample detected 34.1% monoclinic $ZrO_2$ and 65.9% tetragonal $ZrO_2$.

**EXAMPLE 122**

Example 119 was followed but in this case using 45.857g of zirconium basic carbonate (43.614% $ZrO_2$, from Mandoval Chemicals, lot 557) as the $ZrO_2$ source. A pale peach powder was obtained with colour coordinates; L = 68.83, a = 17.72, b = 5.73, C = 18.63 and H = 17.91. Chemical analysis of the powder identified 3.37% Ag, 0.09% K and 0.07% Na. This powder produced a golden brown colour in on-glaze application on porcelain, with colour coordinates; L = 66.58, a = 19.90, b = 29.88, C = 35.91 and H = 56.34. X-ray diffraction characterisation of this sample detected 98.9% monoclinic $ZrO_2$ and 1.1% tetragonal $ZrO_2$, together with a small amount of AgCl.

**EXAMPLE 123**

Example 119 was followed but in this case using 49.807g of zirconium basic carbonate (40.155% $ZrO_2$, from Mandoval Chemicals, lot 1077) as the $ZrO_2$ source. A pale peach/pink powder was obtained with colour coordinates; L = 58.09, a = 22.32, b = -5.38, C = 22.96 and H = 346.46. Chemical analysis of the powder identified 0.56% Ag, 0.05% K and 0.08% Na. This powder produced a golden brown colour with a slight peach tinge in on-glaze application on porcelain, with colour coordinates; L = 70.03, a = 19.87, b = 23.79, C = 30.99 and H = 50.13. X-ray diffraction characterisation of this sample detected 96.6% monoclinic $ZrO_2$ and 3.4% tetragonal $ZrO_2$.

The colour variation observed for the pigmentary materials obtained in Examples 121-123, prepared using Mandoval zirconium basic carbonate as the $ZrO_2$ source are attributed to a number of reasons, including: the differing type and content of contaminants present in the starting materials, and on how the starting materials are prepared, and to particle size variation. In addition, the different grades of Mandoval zirconium basic carbonate give rise to differing proportions of monoclinic:tetragonal $ZrO_2$. These starting materials are known to contain a proportion of Na ions, as confirmed by chemical analysis of the products obtained in Examples 121-123. 0.36% Na was detected in the sample produced in Example 121. This starting material, lot 534, was reported to contain 39.9% $ZrO_2$ + 0.71% Na + 0.07% $SO_4$ + 6.3% $CO_2$ + <10 parts per million Fe. The starting material used in Example 122, lot 557, is thought to contain a proportion of Cl ions, producing the AgCl detected in the resultant product.

### EXAMPLE 124: Addition of a large amount of fluoride

A Ag and K doped $ZrO_2$ pigmentary material was prepared starting with 7.902mol% Ag and 1.319mol% K, using a crystalline $ZrO_2$ source with the addition of a large amount of fluoride, and an organic reducing agent. The sample was prepared according to Example 1 of US specification 3046151 referred to above, with 0.815 parts of $K_2CO_3$ added.

Previous investigations of Examples from the US specification had revealed the production of markedly inhomogeneously coloured samples, with the bulk being cream/white in colour with only a very thin layer of *ca* 1mm of coloured material, on firing the material in layers thicker than a few millimetres. More homogeneously coloured samples had been found on firing the material in very thin layers of less than 5mm deep. The present sample was therefore fired in a thin layer.

1. 20.0g (100 parts) of $ZrO_2$ (from Fisons, reference number Z/1850), 16.0g (80 parts) of $NH_4HF_2$, 0.4g (2 parts) of starch and 0.163g (0.815 parts) of $K_2CO_3$ were hand ground with acetone in a pestle and mortar for 15 minutes.

2. The sample was then left to stand for 1 hour to ensure the removal of any trace acetone by evaporation.

3. 2.4g (12 parts) of $AgNO_3$ was dissolved in *ca* 4g of distilled water and was added to the aforementioned mixture, together with two washings.

4. The resultant paste mixture was ground for 5-10 minutes.

5. The paste was then spread out in a thin layer of *ca* 2mm in an aluminosilicate muffle tray and calcined at 1000°C for 2 hours. A ramp rate of 6.67°C/minute was employed, and the sample furnace cooled. A thin, hard layer of sample was obtained which was slightly inhomogeneous in colour, with a pale pink lower layer and a purpler surface layer. Degradation of the muffle tray was noted.

6. The sample was then hand ground in a pestle and mortar to produce a pale pink powder with colour coordinates; L = 71.31, a = 15.43, b=-3.41, C = 15.80 and H = 347.54.

### EXAMPLES 125 - 141: Admixtures with other pigmentary materials or mixing fluxes

The colour range of Ag and alkali metal doped $ZrO_2$ pigmentary materials can be extended by the addition of other pigmentary materials or mixing fluxes. A series of Examples are shown in Table 14, together with corresponding porcelain on-glaze colour coordinates. Example 126 was prepared in unleaded frit, whereas Examples 125 and 127-141 were prepared in leaded frit.

In each case the enamel mixtures were prepared by sieving a Ag and K doped $ZrO_2$ pigmentary enamel with the required additional pigmentary enamel or flux through a 200 mesh sieve. This process was repeated 2-3 times until a homogeneous mix was obtained. The enamels or fluxes were admixed in the percentages quoted in Table 14. An ink was then prepared and screen printed through a 120T screen. Examples 131-141 were hand printed through a 120T screen.

The additional enamels and mixing fluxes employed in Examples 126-141 were obtained from Cookson Matthey Ceramics plc.

## TABLE 14

Mixtures with additional pigmentary enamels or fluxes, and corresponding porcelain on-glaze colour coordinates

| Example number | Ag and K doped ZrO$_2$ preparative route, and % employed | Additional pigmentary enamel or mixing flux, and weight% employed | Porcelain on-glaze colour coordinates | | | | |
|---|---|---|---|---|---|---|---|
| | | | L | a | b | C | H |
| 126 | Example 60, 80% | Golden brown Zn, Fe, Cr aluminate, 20% | 47.20 | 31.85 | 5.36 | 32.30 | 9.55 |
| 127 | Example 125, 80% | Blue CoAl$_2$O$_4$, 20% | 44.55 | 28.88 | -3.62 | 29.10 | 352.85 |
| 128 | Example 125, 50% | Blue CoAl$_2$O$_4$, 50% | 42.78 | 20.16 | -15.47 | 25.41 | 322.50 |
| 129 | Example 125, 90% | Red Cd sulpho-selenide, 10% | 46.74 | 33.60 | 6.22 | 34.17 | 10.49 |
| 130 | Example 125, 70% | Red Cd sulpho-selenide, 30% | 49.87 | 28.91 | 14.74 | 32.45 | 27.02 |
| 131 | Example 125, 90% | Orange Cd sulpho-selenide, 10% | 44.66 | 32.07 | 6.62 | 32.75 | 11.67 |
| 132 | Example 125, 80% | Orange Cd sulpho-selenide, 20% | 47.46 | 32.43 | 13.75 | 35.23 | 22.97 |
| 133 | Example 125, 90% | Pink colloidal gold based enamel,10% | 43.65 | 31.27 | 0.35 | 31.27 | 0.64 |
| 134 | Example 125, 50% | Pink colloidal gold based enamel, 50% | 45.30 | 32.47 | -0.14 | 32.47 | 359.75 |
| 135 | Example 125, 10% | Pink colloidal gold based enamel, 90% | 45.53 | 34.70 | 0.07 | 34.70 | 0.12 |

EP 0 741 172 A1

| Example number | Ag and K doped $ZrO_2$ preparative route, and % employed | Additional pigmentary enamel or mixing flux, and weight% employed | Porcelain on-glaze colour coordinates | | | | |
|---|---|---|---|---|---|---|---|
| | | | L | a | b | C | H |
| 136 | Example 125, 70% | Maroon colloidal gold based enamel, 30% | 39.96 | 28.99 | 1.31 | 29.02 | 2.59 |
| 137 | Example 125, 90% | Yellow lead antimonate, 10% | 42.29 | 30.10 | 3.11 | 30.26 | 5.90 |
| 138 | Example 125, 80% | Yellow lead antimonate, 20% | 43.71 | 30.24 | 4.88 | 30.63 | 9.18 |
| 139 | Example 125, 70% | Yellow lead antimonate, 30% | 45.88 | 30.50 | 7.33 | 31.37 | 13.51 |
| 140 | Example 125, 50% | Leaded mixing flux, 50% | 56.55 | 30.38 | 0.84 | 30.39 | 1.59 |
| 141 | Example 125, 25% | Leaded mixing flux, 75% | 66.36 | 23.97 | 0.83 | 23.99 | 1.97 |

EP 0 741 172 A1

### EXAMPLE 125: Sample Preparation

The preparative route for a Ag and K doped $ZrO_2$ pigmentary material, starting with 9.211mol% Ag and 1.198mol% K is provided.

1. 196.186g of zirconium hydroxide (71.361% $ZrO_2$) was ball milled with 13.534g of $Ag_2O$, 1.050g of $K_2CO_3$ and 150ml of acetone in a 2 pint (1.14 litre) ball mill for 5 hours.

2. The acetone was evaporated off and the powder dry mixed in a mortar and pestle for 10-15 minutes.

3. The sample was then fired and acid washed as described in Example 1, using amounts pro-rata to the equivalent $ZrO_2$. A purplish pink powder was obtained with colour coordinates L = 37.10, a = 25.01, b = -11.64, C = 27.59 and H = 335.04. This powder produced a strong reddish peach colour with a slight purplish tinge in leaded frit in on-glaze application on porcelain, with colour coordinates; L = 43.02, a = 33.58, b = 2.58, C = 33.68 and H = 4.39.

### EXAMPLES 142 - 146: Pigment Applications

The present pigmentary material can be used for a wide range of pigmentary and ceramic systems including on-glaze, in-glaze, under-glaze, glass, plastic, dispersion, jewellery, tile and sanitary ware colouration and related applications. The material can also be used as a colourant in ceramic four-colour printers, in particular as a ceramic four-colour magenta.

The wide colour range possessed by the present material can be extended using various coated, doped or surface treated frit systems. Colour changes can also be produced by sintering the enamels prior to application.

### EXAMPLE 142: On-glaze Application

A wide range of pink, peach/pink, orange/peach, pink/purple, reddish peach and reddish purple colours were obtained using the present pigmentary materials in on-glaze application on porcelain, china and earthenware. Colour coordinate data of a selection of porcelain and earthenware trials are provided in the aforementioned Examples. The majority of these trials were assessed in unleaded frit on porcelain, with a few trials assessed in leaded frit (as specified in the text). The earthenware trials were assessed in unleaded frit. An outline of the experimental procedures employed for the unleaded (Method A) and leaded (Method B) frit systems is provided.

### Method A : Unleaded On-glaze Application

1. An enamel composition was prepared by ball milling a 50g mixture of the present pigmentary material and unleaded on-glaze frit (Cookson Matthey Ceramics plc) with 20ml of water, in a 1 pint (0.57 litre) ball mill for *ca* 16 hours until an average particle size of 4.5μm was achieved. A pigment loading of 5-40weight% was employed in the mixture.

2. The resultant slurry was dried at 100°C and sieved through a 40 mesh followed by a 200 mesh sieve.

3. An ink was prepared by thoroughly mixing 20g of the resultant enamel composition with 16g of transfer medium (63/535, Cookson Matthey Ceramics plc).

4. Transfers were then screen printed through a 120T screen. The dried prints were subsequently overprinted with a covercoat composition (OPL 164, Cookson Matthey Ceramics plc), using a 25 mesh screen, and allowed to dry.

5. The printed decals were then applied to the ware, *eg* china, porcelain or earthenware.

6. Typical firing cycles are provided for earthenware, china and porcelain firings. The earthenware trials were fired at 740°C, china at 780°C and porcelain at 810°C, for a 1 hour period. A ramp rate of 150°C/minute was employed in each case, and the ware furnace cooled to room temperature.

The unleaded on-glaze enamels referred to in the preceding Examples were prepared with a pigment loading of 20weight% of the mixture of present pigment plus frit.

## Method B : Leaded On-glaze Application

Method A was followed but in this case using a leaded on-glaze frit (Cookson Matthey Ceramics plc). In addition, the inks were prepared with an enamel:medium ratio of 10:6 instead of the 10:8 employed for unleaded enamels.

The leaded on-glaze enamel referred to in Example 125 was prepared with a pigment loading of 20weight% of the mixture of present pigment plus frit.

## EXAMPLE 143: In-glaze Application

A number of samples were assessed in in-glaze application on porcelain with pale pink and strong pink colours produced. An outline of the experimental procedure employed is provided.

1. 200g of unleaded in-glaze frit ( Cookson Matthey Ceramics plc) was ball milled in water, to an average particle size of 4.5µm.

2. The resultant slurry was dried at 100°C and seived through a 40 mesh sieve.

3. 50g quantities of enamel were then prepared by dry-blending the pre-ground frit and the present pigmentary material with a pigment loading of 5-60weight% of the present pigmentary material plus frit, depending on the colour of the pigmentary material, in a high speed disperser.

4. The blended enamel was then sieved through a 200 mesh sieve.

5. An ink was prepared by thoroughly mixing 20g of enamel with 14g of transfer medium (63/535, Cookson Matthey Ceramics plc).

6. The ink was then screen printed through a 120T screen, dried and covercoated (OPL 164, Cookson Matthey Ceramics plc) to prepare transfers. Once dry, the transfers were applied to porcelain ware.

7. A typical firing cycle of 1200°C for 2 minutes was employed, with a ramp rate of 40°C/minute from room temperature. The ware was cooled at approximately the same rate, of 40°C/minute. The inglaze samples can be fired from 1150-1250°C.

A strong pink in-glaze colour was produced using the Ag and K doped $ZrO_2$ pigmentary material produced in Example 67, whereas a pale pink in-glaze colour was produced by the material prepared in Example 68. In this case the enamels were prepared with a 25weight% pigment loading in the mixture of pigment plus frit. The transfers were applied to porcelain and fired at 1150°C.

## EXAMPLE 144: Use on Glass

A wide range of pinkish purple, purplish red, reddish brown, orange/brown and brownish yellow colours were produced on applying the present pigmentary material to glass.

1. An enamel composition was prepared by ball milling a 50g mixture of pigmentary material and leaded frit (Cookson Matthey Ceramics plc) with 30ml of water in a lpint (0.57 litre) ball mill for 16 hours until an average particle size of ca 4.5µm was achieved. A pigment loading of 5-40weight% in the mixture of pigment and frit was employed.

2. The resultant slurry was dried at 100°C and sieved through a 40 mesh followed by a 200 mesh sieve.

3. An ink was prepared by thoroughly mixing 20g of the resultant enamel composition with 6.67g of transfer medium (63/485, Cookson Matthey Ceramics plc).

4. The ink was then screen printed directly onto the non-tin side of a glass slide (the side of the float glass which was not in contact with molten tin during its manufacture), through a 77T screen.

5. The glass slides were fired at 580°C for 15 minutes, with a ramp rate of 580°C/hour from room temperature, and furnace cooled.

A selection of Ag and K doped $ZrO_2$ pigmentary materials were investigated on glass, the colour coordinates of a number of specific Examples are provided in Table 15. The enamels were prepared with a pigment loading of 10weight% in the mixture of pigment plus frit. The glass trials were backed with a white calibration tile when recording the colour measurements.

TABLE 15

| Example number, colour coordinates on glass, and a visual description of the colour produced. | | | | | | |
|---|---|---|---|---|---|---|
| Example number | Glass colour coordinates | | | | | Colour description |
| | L | a | b | C | H | |
| 55, Method A | 38.38 | 13.14 | 3.39 | 13.57 | 14.49 | purplish red |
| 60 | 43.83 | 20.17 | 13.50 | 24.27 | 33.80 | orange/brown |
| 13 | 40.92 | 19.01 | 11.17 | 22.05 | 30.43 | reddish brown |
| 15 | 52.38 | 20.39 | 27.08 | 33.89 | 53.03 | brownish yellow |
| 17 | 56.39 | 19.56 | 30.18 | 35.97 | 57.06 | paler brownish yellow |

In general, a colour change from pinkish purple to purplish red, reddish brown, orange/brown and brownish yellow was noted on glass for samples prepared with an increasing initial K loading.

The Ag and K doped $ZrO_2$ pigmentary material prepared in Example 13 was also investigated on sintering the glass enamel at 600°C prior to application. In this case the enamel was prepared as stated above and then spread out in a thin layer on a preheated muffle tray containing china clay. It was placed in a furnace at 600°C for 30 minutes and then quenched directly into water. The glass enamel was then dried and planetary milled in water for 45 minutes to produce a fine powder of $ca$ 4.5μm. It was then sieved, printed and fired as stated above. An orange/brown colour was produced with colour coordinates; L = 43.33, a = 19.59, b = 13.86, C = 24.00 and H = 35.29 (slightly lighter, and yellower than the colour produced using the unsintered glass enamel).

Colour changes were also noted on printing the enamels on the tin side of float glass rather than the non-tin side.

## EXAMPLE 145: Use on Tableware Glass

A wide range of pink, pink/purple, pink/peach, orange/peach and reddish peach colours were obtained on applying the present pigmentary materials to tableware glass. An outline of the experimental procedure employed is provided.

1. An enamel was prepared by ball milling a 50g mixture of the present pigmentary material and leaded frit (Cookson Matthey Ceramics plc) with 16ml of water in a 1 pint (0.57 litre) ball mill for $ca$ 16 hours until an average particle size of 4.5μm was achieved. A pigment loading of 5-40weight% in the mixture of pigmentary material and frit was employed.

2. The resultant slurry was dried at 100°C, and then sieved through a 40 mesh followed by a 200 mesh seive.

3. An ink was prepared by thoroughly mixing 10g of resultant enamel composition with 6g of transfer medium (63/535, Cookson Matthey Ceramics plc).

4. The ink was then printed through a 120T screen, dried and covercoated (OPL 164, Cookson Matthey Ceramics plc).

5. The dried printed transfers were then applied to a tableware glass substrate.

6. A typical firing cycle of 700°C for 2.5 minutes was employed, with a ramp rate of 70°C/minute.

The Ag and K doped pigmentary material prepared in Example 125 produced a purplish pink colour on opaque white tableware glass. The effect of sintering this enamel at 700°C for 30 minutes was also investigated (using the technique described in Example 144). A pink/peach colour was produced on opaque white tableware glass in this case.

**EXAMPLE 146: Tile Glaze Application**

The pink and purplish pink powder colours of the present pigmentary material produced pink and salmon pink colours in tile glaze application. The following experimental procedure was employed.

1. A 30g mixture of pigmentary material and opaque wall tile glaze (Cookson Matthey Ceramics plc) was planetary milled with *ca* 0.1g of Plaster of Paris and 15ml of water for 5 minutes. A pigment loading of 2-10weight% of the mixture of pigmentary material plus glaze was employed.

2. The resultant slurry was emptied onto a glass slab and mixed with a palette knife.

3. Biscuit tiles were then dipped in the slurry to produce a glaze depth of 0.50-0.60mm, and allowed to dry.

4. The tiles were then fired at 1000-1060°C for 1 hour, with a ramp rate of 150°C per hour and furnace cooled.

The Ag and K doped pigmentary material prepared in Example 67 produced pale pink coloured wall tiles, using a pigment loading of 4.8weight% of the mixture of pigmentary material plus glaze and firing at 1060°C.

A series of trials were prepared using washed and unwashed pigmentary materials. In general, darker and pinker colours were obtained using the unwashed powders.

**Claims**

1. A pigmentary material comprising a lattice of crystalline zirconia containing doped therein silver and alkali metal selected from the group consisting of lithium, potassium, rubidium and caesium.

2. A material according to claim 1 wherein the alkali metal is potassium.

3. A material according to claim 1 or 2 which contains at least 0.05% by weight of the silver.

4. A material according to claim 3 which contains at least 0.4% by weight of the silver.

5. A material according to claim 4 which contains 1-6% by weight of the silver.

6. A material according to any one of the preceding claims which contains at least 0.05mol% of the alkali metal.

7. A material according to claim 6 which contains at least 0.1mol% of the alkali metal.

8. A material according to claim 6 which contains 0.05-1.1mol% of the alkali metal.

9. A material according to any one of the preceding claims which contains in its surface less than 0.1 atomic% of fluoride as measured by X-ray photoelectron spectroscopy.

10. A process for preparing a material claimed in any one of the preceding claims, which process comprises calcining a zirconium component which yields the zirconia, a silver component which yields the silver, and an alkali metal component which yields the alkali metal, forming a calcination mixture of the resultant zirconium, silver and alkali metal moieties and cooling the mixture.

11. A process for preparing a material claimed in any one of claims 1-9, which process comprises calcining a mixture of a zirconium component which yields the zirconia, a silver component which yields the silver, and an alkali metal component which yields the alkali metal and cooling the mixture.

12. A process according to claim 10 or 11 wherein the weight of fluoride compound in the total weight of the components to be calcined is less than 6%.

13. A process according to any one of claims 10-12 wherein the calcination mixture is at a temperature in the range 650-1300°C.

14. A process according to any one of claims 10-13 wherein the zirconium component is such that it decomposes to zirconia on heating to the temperature of the calcination mixture.

15. A process according to any one of claims 10-14 wherein the zirconium component is zirconium hydroxide and/or zirconium carbonate.

16. A process according to any one of claims 10-15 wherein the zirconium component is amorphous.

17. A process according to any one of claims 10-16 wherein the zirconium component is of particle size 1-15μm as measured by Coulter Counter.

18. A process according to any one of claims 10-17 wherein the silver component is silver, silver nitrate, silver acetate, silver(I) oxide, silver(II) oxide or silver carbonate.

19. A process according to any one of claims 10-18 wherein the silver component is of particle size 0.1-15μm as measured by Coulter Counter.

20. A process according to any one of claims 10-19 wherein the alkali metal component is alkali metal carbonate, hydrogen carbonate, acetate, citrate, oxalate, nitrate, hydrogen phthalate or fluoride.

21. A pigment comprising the pigmentary material claimed in any one of claims 1-9.

22. A substance coloured by containing dispersed therein the pigment claimed in claim 21.

23. A substance according to claim 22 which is an enamel or glaze.

24. An enamel composition comprising a frit and the pigment claimed in claim 21.

25. A transfer comprising the enamel composition claimed in claim 24 on a transfer backing sheet.

26. An article bearing on its surface the enamel composition claimed in claim 24 which has been fired thereon.

27. An article according to claim 26 which is porcelain, china, earthenware or glass.

EP 0 741 172 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | EP-A-0 651 030 (COOKSON MATTHEY CERAMICS & MATERIALS)<br><br>* claims 1-26; examples 8-10 *<br>--- | 1,4-6,<br>9-18,<br>21-27 | C09C1/00 |
| D,A | US-A-3 046 151 (F. K. ILIFF)<br>* claim 1 *<br>--- | 1 | |
| A | FR-A-2 228 739 (DEGUSSA)<br>* page 1, last paragraph - page 2, paragraph 1 *<br>----- | 1 | |

| TECHNICAL FIELDS SEARCHED (Int.Cl.6) |
|---|
| C09C |

**European Patent Office**

**EUROPEAN SEARCH REPORT**

Application Number

EP 96 30 2645

The present search report has been drawn up for all claims

| Place of search | Date of completion of the search | Examiner |
|---|---|---|
| THE HAGUE | 6 August 1996 | Van Bellingen, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)